# EUROPÄISCHE PATENTANMELDUNG

(11) **EP 4 242 046 A2**
(43) Veröffentlichungstag der Anmeldung: **13.09.2023**
(21) Anmeldenummer: 23188282.0
(22) Anmeldetag: 16.03.2020
(51) Int. Cl.: B60L 53/302

(54) **KÜHLBARE EINZELLEITUNG UND LADEKABEL**

(62) Teilanmeldung aus: 20163431.8
(71) Anmelder: BRUGG eConnect AG, 5200 Brugg AG (CH)
(72) Erfinder: Oslislok, Tomasz, 5330 Bad Zurzach (CH); Martinez Vall, Albert, 5400 Baden (CH)
(74) Vertreter: Daub, Thomas

(57) **Zusammenfassung**

Ein Ladekabel (12) für hohe Ladeströme von 200 A und mehr, vorzugsweise 700 A, zumindest zu einem Laden eines Energiespeicher (151) eines Fahrzeugs (15), umfassend eine erste und eine zweite Einzelleitung, wobei jede der Einzelleitungen eine offene Stützstruktur (011,012) mit einer Längsausdehnung, mindestens einen Kanal-Leiter (2) aus elektrisch leitendem Material, und eine Isolierung (3) aufweist. Der mindestens eine Kanal-Leiter (2) umwickelt und berührt die offene Stützstruktur (011,012) entlang ihrer Längsausdehnung. Die Isolierung (3) umhüllt die offene Stützstruktur (011,012) und den mindestens einen Kanal-Leiter (2). Es ist mindestens ein Kanal (4) für ein Kühlfluid (5) vorhanden und dieser Kanal (4) wird durch die Stützstruktur (011,012) und die Kanal-Leiter (2) gebildet. Die Isolierung (3) ist für das Kühlfluid (5) undurchdringbar ist und elektrisch isolierend.

## Beschreibung

### Technisches Gebiet

Die Erfindung betrifft ein Ladekabel mit Einzelleitungen, ein Ladesystem in welchem das Ladekabel eingesetzt wird sowie ein Verfahren zum Laden eines Energiespeichers, insbesondere einer Antriebsbatterie eines Fahrzeuges, bei welchem ein erfindungsgemässes Ladekabel zum Einsatz kommt.

### Stand der Technik

Die CN 1 06 782 835 A (Shenzhen Baoxing) beschreibt ein Autoladekabel. Es umfasst flexible Schläuche aus einem elektrisch isolierenden Material, durch welche ein Kühlfluid zirkulieren kann. Die Schläuche verlaufen im Inneren der stromübertragenden Leiteranordnung.

Einen ähnlichen Ansatz, also die Nutzung von Schläuchen oder Rohren im Inneren der Leiteranordnung, schlagen auch die US 2012 199 390 A1 (Hitachi Cable) und die CN 1 06 849 227A (Shenzhen Woer) vor.

Diese Anordnungen haben den Nachteil, dass die Wärme, die in den Leiteranordnungen entsteht, durch das Schlauchmaterial hindurch geleitet werden muss, bevor sie durch das Kühlfluid abtransportiert werden kann. Die Kühlung erfolgt zeitverzögert und weniger effizient.

Die CN 1 06 887 277 A (Jiangsu Shengbide Special) und die DE 20 2015 009 531 U1 (Porsche) lassen hingegen ein Kühlfluid auf der Aussenseite der Leiteranordnung vorbeilaufen, da die Kontaktfläche dort grösser ist und die Wärmeabgabe somit effizierter sein kann.

Derartige Anordnungen haben den Nachteil, dass die Kühlung leicht unterbrochen werden kann, wenn Druck von aussen auf dem Kabel lastet. Gerade bei Ladekabeln für Fahrzeuge, wie beispielsweise PKW, besteht die Gefahr, dass ein Mensch oder ein Fahrzeug auf dem Kabel steht und den Kühlmittelkanal abdrückt. Wird der Kühlmittelkanal verstärkt, um diesem Problem vorzubeugen, so muss das Kabel entsprechend dicker werden und verliert damit an Handlichkeit.

### Darstellung der Erfindung

Ein Ladekabel soll von seinem Durchmesser derart gestaltet sein, dass ein Mensch es gut greifen kann, also einen möglichst kleinen Durchmesser von bevorzugt weniger als 5 cm haben. Es soll so flexibel und leicht wie möglich sein, um gut handhabbar zu sein. Ausserdem darf es sich nicht so stark erhitzen, dass es für den Nutzer unangenehm zu fassen ist. Ab etwa 40°C Oberflächentemperatur wird es sehr unangenehm einen Gegenstand, beispielsweise ein Ladekabel, zu greifen. Es muss robust sein und das Überfahren mit einem Auto vertragen. Neben all diesen Anforderungen muss das Ladekabel hohe Ströme übertragen können. Der aktuell übliche Ladestrom ist bei 200 A. Es ist aber durchaus denkbar, dass in näherer Zukunft auch noch höhere Ströme übertragen werden sollen und zwar insbesondere bis zu 700 A. Es ist daher wünschenswert, ein Kabel zur Verfügung zu stellen, welches sich an den zu übertragenden Strom angepasst betreiben lässt.

Aufgabe der Erfindung ist es, eine dem eingangs genannten technischen Gebiet zugehörende Einzelleitung zu schaffen, welche leicht und flexibel ist und dennoch grosse Ströme übertragen kann, ohne unangenehm heiss zu werden. Ein Kabel, in welchem derartige Einzelleitungen verbaut sind, kann ebenfalls leichter und flexibler gestaltet werden als ein vergleichbares Kabel mit andersartigen Einzelleitungen.

Die Lösung der Aufgabe ist durch die Merkmale des Anspruchs 1 definiert.

Eine erfindungsgemässe Einzelleitung für ein Ladekabel, umfasst eine offene Stützstruktur mit einer Längsausdehnung, mindestens einen Kanal-Leiter, aus elektrisch leitendem Material, und eine Isolierung.

Der mindestens eine Kanal-Leiter umwickelt und berührt die offene Stützstruktur. Die Isolierung umhüllt die offene Stützstruktur und den mindestens einen Kanal-Leiter. Es ist mindestens ein Kanal für ein Kühlfluid vorhanden. Dieser Kanal wird durch die Stützstruktur und die Kanal-Leiter gebildet. Die Isolierung ist für das Kühlfluid undurchdringbar und elektrisch isolierend .

Die Einzelleitung ist derart konzipiert, dass sich die in den Kanal-Leitern durch ihren Ohm'schen Wiederstand entstehende Wärme effektiv abgeführt werden kann. Die Einzelleitung soll unter Witterungsbedingungen, also in einem Temperaturbereich von beispielsweise -50°C bis 50°C einsatzfähig sein.

Da das Kühlfluid durch die offene Stützstruktur direkt mit den Kanal-Leitern in Kontakt treten kann, ist die Kühlung sehr effizient: Einerseits muss die Wärme nicht durch einen Schlauch oder eine andere Art von Trennschicht geleitet werden, andererseits hat eine Gruppe von Kanal-Leitern in den meisten Fällen eine grössere Oberfläche als die Innenseite eines Kreiszylinders, durch welchen ein Schlauch approximiert werden kann.

Ein innenliegender Kühlkanal ist ausserdem besser vor einem Abdrücken geschützt als ein aussenliegender Mantel.

Ein Umwickeln der Stützstruktur mit den Kanal-Leitern macht die resultierende Einzelleitung flexibel: Parallel zu der Stützstruktur verlaufende Kanal-Leiter bieten dem Kühlfluid zwar weniger Strömungswiderstand und lassen sich so noch besser kühlen, angeschlossen wirken solche Leiter aber wie ein Zug- und Druck-Gurt-System und würden so eine Einzelleitung mit parallel verlaufenden Kanal-Leitern versteifen.

Ein weiterer Vorteil des Umwickelns liegt in der einfachen Fertigung: Es können im Wesentlichen Anlagen der Seilherstellung genutzt werden, bei denen einzig der Einzug der Kernlitze oder der Einlage auf die spezielle Ausgestaltung der offenen Stützstruktur angepasst werden muss. Da durch das Umwickeln die Kanal-Leiter sich quasi selbst in ihrer Sollposition relativ zur Stützstruktur halten, kann ein Zwischenprodukt der Einzelleitung auf einer Rolle zwischengelagert werden bis die Isolierung aufgebracht wird. Beim Aufbringen der Isolierung kann dann auf die getrennte und bewusste Führung von Kanal-Leitern und Stützstruktur verzichtet werden, die bei parallel zur Stützstruktur verlaufenden Leitern gebraucht würde.

Die Stützstruktur sorgt dafür, dass der Innendurchmesser stets einen bestimmten Minimalwert hat. Ausserdem erhöht sie die Überrollfestigkeit der Einzelleitung: Da auf den Leiter wirkende Druckkräfte teilweise durch die Isolierung und die Leiteranordnung aufgenommen werden und durch diese räumlich etwas verteilt werden, ist die lokale Belastung auf der innenliegenden Stützstruktur geringer als bei einer ausserhalb der Leiteranordnung liegenden Stützstruktur. Die Stützstruktur kann so stabil gebaut werden, wie nötig um den gewünschten Kräften standhalten zu können.

Die in der Einzelleitung vorkommenden Leiter können zwei Gruppen zugeordnet werden: Kanal-Leiter und übrige Leiter. Die Gruppe der Kanal-Leiter und die übrigen Leiter, wenn sie denn vorkommen, werden im Folgenden als Leiteranordnung bezeichnet.

Kanal-Leiter sind Leiter die die Stützstruktur zumindest an einer Stelle berühren oder auf der konvexen Hülle der Stützstruktur liegen und die den Kanal für das Kühlfluid begrenzen. Die Enden der Stützstruktur sollen dabei unberücksichtigt bleiben. Bevorzugt sollen zudem alle Drähte einem Kanal-Leiter zugeordnet sein, die auf allen Seiten von Kanal-Leitern umgeben sind: Der Kerndraht einer Litze, deren Aussendrähte Kanal-Leiter sind, ist somit auch ein Kanal-Leiter. In dem Fall, dass alle Leiterdrähte einer Struktur, beispielsweise einer Litze oder einem Bündel, den Kanal-Leitern zugerechnet werden, wird diese Struktur selbst als Kanal-Leiter bezeichnet. Im oben gegebenen Beispiel ist also die Litze ein Kanal-Leiter.

Übrige Leiter sind alle Leiter, die sich entlang der Längsausdehnung der Stützstruktur erstrecken, mit den Kanal-Leitern in elektrischen Kontakt stehen, aber selbst nicht den Kanal-Leitern zuzuordnen sind. Auch hier werden Strukturen wie beispielsweise Litzen und Bündel als "übrige Leiter" bezeichnet, wenn all die zu ihnen gehörenden Leiterdrähte "übrige Leiter" darstellen.

Besteht eine Struktur, wie beispielsweise eine Litze oder ein Bündel, teilweise aus Leiterdrähten, die den Kanal-Leitern zugeordnet werden und teilweise aus Leiterdrähten, die den übrigen Leitern zugeordnet werden, so wird die Struktur bevorzugt den Kanal-Leitern zugeordnet.

Unter Umwickeln oder Wickeln ist ein Prozess zu verstehen, bei dem die zu umwickelnde Struktur ihre Form im Wesentlichen beibehält und das Objekt mit dem Umwickelt wird schraubenlinienförmig um die zu umwickelnde Struktur gelegt wird. Beim Verdrillen folgen hingegen alle beteiligten Objekte im Ergebnis eine Schraubenform deren Längsachse gegenüber den Längsachsen allen beteiligten Objekts versetzt ist. In diesem Sinne sind Umwicklen und Verdrillen Verseilungstechniken.

Eine Litze soll, analog zur Seiltechnik, eine Struktur aus mehreren miteinander verdrillten Drähten bezeichnen. Die bei dem Verdrillen genutzte Ganghöhe ist dabei wesentlich kleiner als bei den im Folgenden beschrieben Bündel.

Ein Bündel soll eine Struktur aus mehreren im Wesentlichen parallel zueinander verlaufenden Drähten bezeichnen. Auch die Drähte eines Bündels sind leicht miteinander verdrillt, allerdings nur gerade in dem Ausmass, das nötig ist um beim Umwickeln der offenen Stützstruktur oder der Kanal-Leiter zu vermeiden, dass Drähte unterschiedlicher Länge im selben Bündel benötigt werden. Im Gegensatz zur Litze, deren Drähte verdrillt werden, bevor sie zum Umwickeln genutzt wird, geschieht das Verdrillen der Drähte des Bündels bevorzugt beim Umwickeln.

Mit dem Begriff Leiterquerschnitt ist hier und im Folgenden die gesamte Querschnittsfläche gemeint, die im Querschnitt der jeweiligen Einzelleitung, von Leitern eingenommen wird. Umfasst eine Leitung oder ein Kabel also beispielsweise drei Drähte als Leiter, die jeweils einen kreisrunden Querschnitt mit einem Radius r haben, so ist der Leiterquerschnitt dieser Leitung oder dieses Kabels 3πr². Falls sich der Leiterquerschnitt nicht aus derartigen geometrischen Überlegungen herleiten lässt, so kann ein Probestück des Kabels oder der Leitung mit bekannter Länge genommen werden. Nun trennt man die Leiter von den übrigen Bestandteilen des Kabels und wiegt sie. Bei bekannter Dichte des Leitermaterials lässt sich so das Volumen der Leiter bestimmen. Teilt man dieses durch die bekannte Länge des Probestückes, so erhält man einen Wert für den Leiterquerschnitt.

Unter der konvexen Hülle eines Körpers versteht die vorliegende Anmeldung die kleineste Hülle, die den Körper vollständig umgibt und bei der jede Verbindungslinie zwischen zwei Punkten auf der Hülle innerhalb des umhüllten Volumens oder auf der Hülle liegt.

Ein effektiver Radius einer Fläche oder eines Gegenstandes lässt sich dadurch bestimmen, dass der Umfang der Fläche oder der Querschnittsfläche des Gegenstandes durch 2π geteilt wird.

Eine Helix im mathematischen Sinne ist eine Kurve, die sich mit konstanter Steigung um den Mantel eines Kreiszylinders windet. Der Radius der Grundfläche des Kreiszylinders ist der Radius der Helix. Die Ganghöhe ist diejenige Strecke, um die sich die Helix bei einer vollen Umdrehung um den Zylinder in Richtung der Längsachse des Zylinders windet. Die Steigung der Helix ist das Verhältnis der Ganghöhe zum Umfang der Grundfläche, also die Ganghöhe geteilt durch 2π mal den Radius der Helix. Der Steigungswinkel ist der Arkustangens der Steigung. Die Gängigkeit der Helix gibt ihre Windungsrichtung an: Windet sie sich im Uhrzeigersinn so ist sie rechtsgängig.

Im Sinne dieser Anmeldung ist eine Helix ein Gegenstand, bei dem sich ein Material mit im Wesentlichen konstantem Querschnitt entlang der mathematischen Kurve erstreckt, beispielsweise ein Stift aus Metall oder Kunststoff mit einem kreisförmigen oder rechteckigen Querschnitt. Bevorzugt kann die Ganghöhe der Helix im Sinne der Anmeldung variieren, wobei in diesem Fall besonders bevorzugt eine effektive Ganghöhe in den verschiedenen Ausführungsformen genutzt wird und diese effektive Ganghöhe die Ausdehnung der Helix entlang ihrer Längsachse geteilt durch die Anzahl Umdrehungen entlang dieser Ausdehnung ist.

Eine Schraubenlinie soll hier und im Folgenden etwas allgemeiner als eine Helix verstanden werden und zwar soll sich die Kurve mit konstanter Steigung um den Mantel eines Zylinders mit beliebiger Grundfläche winden. Die Grundfläche dieses Zylinders sei auch die Grundfläche der Schraubenlinie. Der Radius der Schraubenlinie ist der effektive Radius der Grundfläche. Die Ganghöhe ist diejenige Strecke, um die sich die Schraubenlinie bei einer vollen Umdrehung um den Zylinder in Richtung der Längsachse des Zylinders windet. Die Steigung der Helix ist das Verhältnis der Ganghöhe zum Umfang der Grundfläche. Der Steigungswinkel ist der Arkustangens der Steigung. Die Gängigkeit der Schraubenlinie gibt ihre Windungsrichtung an: Windet sie sich im Uhrzeigersinn so ist sie rechtsgängig.

Im Sinne dieser Anmeldung ist eine Schraubenlinie ein Gegenstand, bei dem sich ein Material mit im Wesentlichen konstantem Querschnitt entlang der mathematischen Kurve erstreckt, beispielsweise ein Stift aus Metall oder Kunststoff mit einem kreisförmigen oder rechteckigen Querschnitt.

Eine offene Stützstruktur ist eine längliche Struktur deren konvexe Hülle die Form eines Zylinders hat, wobei entlang und im Inneren der konvexen Hülle mindestens ein durchgehender Kanal, also ein Kanal der nicht von der Struktur unterbrochen wird, verläuft. Bei dieser Betrachtung soll die Stützstruktur bevorzugt als in ihrer Längsrichtung unendlich ausgedehnt angenommen werden.

Ein Beispiel für eine offene Stützstruktur ist eine Helix aus einem Runddraht mit einem Drahtdurchmesser d und mit einer Ganghöhe h, die grösser ist als der Drahtdurchmesser d.

In diesem Fall ist die konvexe Hülle ein Kreiszylinder. Der Kanal stellt ebenfalls einen Helix dar und verläuft um die halbe Ganghöhe h versetzt zu dem Draht, sowie zusätzlich in dem von der Helix umgebenen Raum. Die Breite des Kanals auf der Aussenseite der Helix ist gleich der Ganghöhe h abzüglich des Drahtdurchmessers d. Dieser Kanal wird durch die Stützstruktur nicht unterbrochen. Somit handelt es sich um eine offene Stützstruktur im Sinne der Erfindung.

Ein anderes Beispiel ist ein offenes Profil, welches im Querschnitt kreuz- oder sternförmig ist: Die konvexe Hülle ist in diesem Fall ein Zylinder mit einem Rechteck oder einem Polygon als Grundfläche. Die Kanäle, es sind mehrere, verlaufen parallel zur Längsachse des Zylinders oder des Profils. Somit handelt es sich auch hier um eine offene Stützstruktur im Sinne der Erfindung.

Ein Schlauch oder ein Rohr sind hingegen keine offenen Stützstrukturen, da der von ihnen gebildete Kanal nicht entlang ihrer konvexen Hülle verläuft sondern vollständig innerhalb von ihr.

Besitzt der Schlauch oder das Rohr hingegen Öffnungen in seiner Seitenwand, so verläuft der Kanal zumindest im Bereich dieser Öffnungen entlang der konvexen Hülle. Es handelt sich dann also um eine offene Stützstruktur.

Leiter sind, im Sinne dieser Erfindung, länglich und bestehen aus elektrisch leitfähigem Material. Leiter können beispielsweise Drähte oder Bänder aus Metall sein. Bevorzugt bestehen Leiter aus einem gut leitenden Material, wobei sie beschichtet sein können. Ein gut leitendes Material hat bevorzugt einen spezifischen Widerstand von weniger als 10⁻⁵ Ωm bei 20°C. Die Beschichtung kann beispielsweise vor Korrosion schützen. Bevorzugt soll auch die Beschichtung leitfähig sein, sie kann aber weniger gut leitfähig sein als das gut leitende Material. Eine Beschichtung ist dabei insbesondere dünner als 100µm. Leiter sind insbesondere normalleitend.

Elektrisch isolierend im Sinne dieser Erfindung ist insbesondere ein Werkstoff mit einem spezifischen Widerstand von mehr als 10⁵ Ωm, bevorzugt von mehr als 10¹⁰ Ωm. Die Erfindung kann insbesondere Ethylen-Propylen-Dien-Kautschuk (EPDM), Ethylen-Propylen-Kautschuke (EPR) und/oder thermoplastische Elastomere (TPE) als isolierende Materialien nutzen.

Ein Geflecht ist ein Produkt, welches durch regelmässiges unter- und über-kreuzen von Strängen erzeugt wird. Stränge können beispielsweise Fasern oder Leiter sein, einzeln oder in Gruppen verdrillt oder zusammengefasst. Die Stränge können sich dabei in einem Winkel von 90° oder in einem anderen Winkel kreuzen. Das Geflecht kann eine ebene Fläche oder Matte bilden, sich also in zwei Dimensionen beliebig weit ausdehnen, oder in einer zylinderähnliche Form vorliegen, die sich nur in einer Dimension beliebig weit ausdehnt und in den anderen beiden Raumdimensionen beschränkt ist. Bevorzugt kreuzen sich die Stränge in einem Winkel ungleich 90° und das Geflecht bildet eine zylinderähnliche Form.

Mit "unmittelbar umhüllen" wird hier und im Folgenden insbesondere gemeint, dass keine weiteren Schichten oder Strukturen zwischen dem Umhüllten und dem Umhüllenden vorgesehen sind. Dabei sollen Hohlräume und/oder Kühlfluid nicht als Schicht oder Struktur angesehen werden.

Mit "umhüllen" wird hier und im Folgenden insbesondere gemeint, dass es durchaus weitere Schichten oder Strukturen zwischen dem Umhüllten und dem Umhüllenden geben kann, diese aber nicht zwingend vorhanden sein müssen.

Bei verschiedenen Ausführungsformen sind verschiedene Verhältnisse quasi-irrationale Zahlen. Quasi-irrationale Zahlen sollen irrationale Zahlen sein, sowie rationale Zahlen die, als gekürzter Dezimalbruch dargestellt, einen grossen Zähler und einen grossen Nenner aufweisen. Gross ist ein Nenner oder ein Zähler vorzugsweise dann, wenn er grösser oder gleich 5, insbesondere grösser oder gleich 10 oder 100 ist. Zur Feststellung ob ein Verhältnis quasi- irrational ist oder nicht, kann der relevante Teil der Einzelleitung oder des Ladekabels auf Periodizität untersucht werden: dieses sollten bei einem quasi-irrationalen Verhältnis im Sinne der Erfindung möglichst nicht auftreten oder die sich wiederholende Länge soll gross sein, also sich beispielsweise über mehr als das 5-, 10- oder 100-fache der grösseren der beiden im Verhältnis zueinander stehenden Zahlen erstrecken.

In einer Ausführungsform folgt jeder der Kanal-Leiter einer Schraubenlinie mit einer Gängigkeit, einer Ganghöhe und einem Radius folgt. Gängigkeit und Ganghöhe der Schraubenlinien aller Kanal-Leiter sind bei dieser Ausführungsform im Wesentlichen gleich.

Bevorzugt sind auch die Radien aller Schraubenlinien aller Kanal-Leiter gleich.

Diese Ausführungsform hat den Vorteil, dass sie besonders einfach herzustellen ist. Die Kanal-Leiter werden alle gleich behandelt und um die offene Stützstruktur gewickelt. Die Stützstruktur wird dabei im Verseilungsverfahren analog zu einer Kernlitze oder einer Einlage eingesetzt. Somit können die aus der Verseilungstechnik bekannten Geräte und Verfahren genutzt werden um besonders einfach und effizient eine Einzelleitung in beliebiger Länge zu produzieren. Die Produktion ist besonders rasch und einfach durchführbar.

Werden die Radien der Schraubenlinien einzelner Kanal-Leiter etwas grösser gewählt als die Radien der Schraubenlinien anderer Kanal-Leiter, so kann die Durchlässigkeit der Kanal-Leiterschicht, also der Menge aller Kanal-Leiter in ihrer Anordnung in der Einzelleitung, für das Kühlfluid sowie die Flexibilität des Kabels erhöht werden.

Die bevorzugte Lösung, die Radien der Schraubenlinien aller Kanal-Leiter gleich zu wählen ist hingegen einfacher und günstiger in der Herstellung und führt durch den resultierenden gleichbleibenden Einzelleitungsaufbau zu einer besseren und vorhersagbareren Haltbarkeit der Einzelleitung.

Bevorzugt folgen die Kanal-Leiter jeweils einer Schraubenlinie mit einer runden Grundfläche.

In einer anderen Ausführungsform ist die Grundfläche der Schraubenlinie hingegen ein Polygon oder ein Kreissegment oder eine Ellipse.

Jeder Kanal-Leiter weist eine Querschnittsfläche auf. In einer Ausführungsform einer Einzelleitung sind die Querschnittsflächen aller Kanal-Leiter gleich.

Wenn die Querschnittsflächen aller Kanal-Leiter gleich sind, so ist einerseits die Herstellung einfacher, da beispielsweise die Führungen der Leiter beim Verseilungsverfahren gleich gestaltet sein können und andererseits führt der resultierenden gleichbleibenden Einzelleitungsaufbau zu einer besseren und vorhersagbareren Haltbarkeit der Einzelleitung.

Bevorzugt werden bei einer gegebenen Anzahl der Kanal-Leiter, die Ganghöhe und der Radius der Schraubenlinien denen sie folgen derart gewählt, dass benachbart liegende Kanal-Leiter sich gerade berühren.

Diese Ausführungsform hat den Vorteil, dass sie einerseits in Herstellung und Lagerung besonders stabil ist: Die Kanal-Leiter fixieren sich gegenseitig in ihrer Lage relativ zueinander. Ausserdem wird somit das stromführende Volumen in direkter Nachbarschaft zum Kühlmittelkanal besonders gross. Fliesst das Kühlfluid durch das Kabel, werden die Kanal-Leiter vom Kanal weg gedrückt und es entstehen Spalte durch welche das Kühlfluid aus dem Kanal austreten kann.

Bevorzugt werden bei einer gegebenen Anzahl der Kanal-Leiter, die Ganghöhe und der Radius der Schraubenlinien denen sie folgen derart gewählt, dass sich zwischen den Kanal-Leitern eine Abstand befindet, der kleiner ist als das 0.5-fache, bevorzugt kleiner als 0.25-fache, besonders bevorzugt kleiner als 0.1-fache des Durchmessers eines Kanal-Leiters ist.

Diese Ausführungsform hat den Vorteil, dass auch bei kleinem Kühlfluid-Druck das Kühlfluid die kanalfernen Bereiche erreicht und effizient kühlen kann. Gleichzeitig gibt es bei Abständen von weniger als 0.5 Durchmesser des Kanal-Leiters immer noch eine genügende Sicherung der Kanal-Leiter untereinander um Beschädigungen der Leiter durch Verrutschen zu verhindern. Bei kleineren Abständen nehmen diese Sicherheit und auch das besonders gut gekühlte Leitungsvolumen zu.

In einer Ausführungsform ist jeder der Kanal-Leiter ein einzelner Leiterdraht. Bevorzugt ist jeder der Kanal-Leiter ein Leiterdraht mit rundem Querschnitt.

Bei einem gegebenen Leiterquerschnitt ergeben sich so vergleichsweise wenige Drähte mit grossen Radien. Neben und zwischen den Kanal-Leitern können so Hohlräume mit vergleichsweise grossen Volumen vorliegenden, in denen das Kühlfluid strömen kann. Obwohl das Verhältnis von gekühlter Oberfläche zu Volumen kleiner ist als bei der Nutzung von vielen Leiterdrähten, kann der verbesserte Kühlfluidstrom zu einer genügenden oder sogar besseren Kühlung führen als bei einer Vielzahl kleinerer Drähte. Zudem wirken die vergleichsweise massiven Kanal-Leiter selbst wie weitere Stützstrukturen und verbessern die Überrollfestigkeit der Einzelleitung. Diese Ausführungsform ist daher besonders gut geeignet, wenn ein Kühlfluid mit einer höheren Viskosität genutzt werden soll oder wenn besonders hohe Anforderungen an die Überrollfestigkeit bestehen.

In einer anderen Ausführungsform sind die Kanal-Leiter Litzen oder Bündel von vielen einzelnen, dünnen, Leiterdrähten.

Bei einer Litze sind die Leiterdrähte untereinander verdrillt, bei einem Bündel verlaufen die Leiterdrähte im Wesentlichen parallel zueinander.

Bündel und Litzen besitzen, auf Grund ihrer Zusammensetzung aus vielen dünnen Drähten, ein besonders hohes Verhältnis von Oberfläche zu Volumen. Litzen sind zudem, wie man es von Seilen her kennt, besonders flexibel. So lassen sich durch den Einsatz von Litzen als Kanal-Leiter besonders flexible Einzelleitungen herstellen. Bündel lassen sich hingegen auf Grund der im Wesentlichen parallel verlaufenden Drähte besonders gut vom Fluid durchströmen und somit im Inneren besser kühlen als Litzen. Da Bündel aus vielen dünnen Drähten bestehen, sind sie ebenfalls deutlich flexibler als entsprechende einzelne Leiterdrähte. Diese Ausführungsformen sind daher besonders gut geeignet, wenn ein Kühlfluid mit einer tieferen Viskosität genutzt werden soll oder wenn eine hohe Flexibilität der Einzelleitung von besonderer Bedeutung ist.

In einer besonderen Ausführungsform sind die Querschnitte der Kanal-Leiter oval, rechteckig oder haben die Form von Ringsegmenten.

Bei diesen Querschnittsformen ist das Verhältnis von Oberfläche zu Volumen besonders gross und gleichzeitig sind die Querschnittsform noch genügend einfach um die für eine Einzelleitung eines Ladekabels nötige Stabilität aufzuweisen. Die Nutzung derartiger Kanal-Leiter kann daher die Kühlung verbessern.

In einer besonderen Ausführungsform sind alle Leiter Kanal-Leiter. Die Isolierung umhüllt somit den Kanal, der die offene Stützstruktur und die Kanal-Leiter umfasst, unmittelbar.

Diese Ausführungsform hat den Vorteil, dass alle Kanal-Leiter direkt mit dem Kühlfluid aus dem Kanal in Berührung gelangen. Es ist somit von geringerer Bedeutung ob und wieviel Kühlfluid zwischen den Kanal-Leitern hindurch in den Bereich zwischen Isolierung und Kanal-Leitern eintreten kann. Letzteres wird unter anderem durch den Kühlfluid-Druck in der Einzelleitung beeinflusst. Die Ausführungsform ist daher besonders unabhängig vom Kühlfluid-Druck.

In einer Ausführungsform der Einzelleitung ist der Kanal, umfassend die offene Stützstruktur und die Kanal-Leiter, von weiteren Leitern umgeben. Die weiteren Leiter sind mit den Kanal-Leitern in elektrischen Kontakt. Die weiteren Leiter sind entweder als ein oder mehrere Geflechte gestaltet, die koaxial um den Kanal herum angeordnet sind oder die weiteren Leiter sind Drähte, Bündel und/oder Litzen, die um den Kanal herum gewickelt sind oder parallel zu dem Kanal angeordnet sind.

Bevorzugt sind die weiteren Leiter Drähte, Bündel und/oder Litzen, die derart um den Kanal herum gewickelt sind, dass die Gängigkeit der Wicklung der Gängigkeit der Schraubenlinien der Kanal-Leiter entspricht und dass die Ganghöhe der Schraubenlinien der weiteren Leiter sich von der Ganghöhe der Schraubenlinien der Kanal-Leiter unterscheidet. Besonders bevorzugt ist die grössere der beiden Ganghöhen zwischen 1.1 bis 5 mal , besonders bevorzugt zwischen 1.5 und 2 mal die kleinere Ganghöhe, wobei das Verhältnis der beiden Ganghöhen bevorzugt eine quasi-irrationale Zahl ist.

Die weiteren Leiter dieser Ausführungsform sind übrige Leiter.

Es ist auch möglich, dass es einige Leiter gibt, die in Geflechten angeordnet sind, welche koaxial zum Kanal liegen und andere Leiter entweder zwischen den Geflechten um den Kanal oder ein weiteres Geflecht herum verdrillt sind oder um alle Geflechte herum verdrillt sind.

Um grosse Ströme übertragen zu können, sollte die Einzelleitung einen gewissen Leiterquerschnitt aufweisen. Bei der Anordnung und Wahl der Kanal-Leiter steht aber stets die Anforderung im Vordergrund, dass eine stabile und den Kanal erhaltende Anordnung der Kanal-Leiter und der Stützstruktur relativ zueinander möglich sein muss. Eine Erhöhung des Leiterquerschnitts durch die Nutzung dickerer Leiter ist daher nur in gewissen Grenzen praktikabel. Unter einem dickeren Leiter sei hier insbesondere ein Leiter zu verstehen, dessen effektiver Radius grösser als 1.25 mm ist. Einfacher erreicht man eine Erhöhung des Leiterquerschnitts indem man weitere Leiter um die die Stützstruktur umwickelnde Kanal-Leiter herum anordnet.

Diese weiteren Leiter können als Geflechte angeordnet werden, was den Vorteil hat, dass die Kanal-Leiter nach aussen hin zusammengehalten und somit stabilisiert werden.

Andererseits ist ein Verdrillen von Leitern, Litzen oder Bündeln um die Kanal-Leiter herum rascher und günstiger in der Herstellung. Da der Kanal für das Kühlmittel bereits durch die Kanal-Leiter gebildet und abgedeckt und somit vor dem Hineinrutschen weiterer Leiter geschützt wird, können weitere Leiter auf den Kanal verdrillt werden, ohne dass der Kanal selbst in Mitleidenschaft gezogen wird.

Der Widerstand eines Leiters, und somit auch die Wärme, die in ihm durch einen bestimmten Strom erzeugt wird, sind proportional zum Querschnitt dieses Leiters. Ein grosser Leiterquerschnitt reduziert daher die entstehende Wärme. Gleichzeitig sind die Leitermaterialien aber dicht und oft wenig flexibel. Für ein Ladekabel ist es daher von Vorteil einen möglichst geringen Leiterquerschnitt zu haben, der aber natürlich noch ausreicht um die Anforderungen an die Wärmebildung zu erfüllen. Dasselbe gilt dementsprechend für die Einzelleitung des Ladekabels.

In einer bevorzugten Ausführungsform sind die weiteren Leiter der Einzelleitung derart angeordnet, dass auch sie für das Kühlfluid durchdringbar sind. Dafür sind die weiteren Leiter mit kleinen Abständen und etwas Spiel zueinander angeordnet, so dass sich unter dem Druck des Kühlfluids kleine Gänge bilden können in welche Kühlfluid eindringen kann. Kleine Abstände sind insbesondere Abstände von weniger als dem 0.1-fachen des effektiven Radius des kleineren der beiden aneinanderstossenden Leiter. Diese Ausführungsform hat den Vorteil, dass die Fläche, die die in den Leiter entstehende Wärme abgeben kann, sehr gross ist. Ausserdem erreicht man so auf einfache Art eine vergleichsweise homogene Temperaturverteilung zwischen allen beteiligten Leitern.

Das gleich-gängige Umwickeln der Kanal-Leiter und der weiteren Leiter um die jeweils innere Schicht, als entweder um die Stützstruktur oder um das Zwischenprodukt aus Stützstruktur mit Umwicklung durch die Kanal-Leiter, führt zu einer vorteilhaften Torisionskräftverteilung.

In einer besonderen Ausführungsform werden die weiteren Leiter mit einer anderen Gängigkeit als die Kanal-Leiter gewickelt. Dies hat den Vorteil, dass das Zwischenprodukt "Stützstruktur mit Leiteranordnung" stabiler ist und somit die Fertigung vereinfacht wird.

Die Wahl einer abweichenden Ganghöhe der Schraubenlinien der weiteren Leiter und der Kanal-Leiter verhindert, dass sich die weiteren Leiter in die Lücken zwischen die Kanal-Leiter drücken können. Damit erhöht sich die Überrollfestigkeit der Einzelleitung. Bei unterschiedlichen, aber ähnlichen Ganghöhenunterschied bleiben die Drahtlängen und der Flexibilität der verschieden Leiterlagen ähnlich. Die Wahl eines quasi-irrationalen Ganghöhenverhältnisses hat den Vorteil, dass sich entlang der Längsausdehnung der Kabel keine oder kaum sich wiederholenden Strukturen geschaffen werden, was die Lebensdauer der Einzelleitung erhöht.

In einer besonderen Ausführungsform gibt es mehrere Lagen von weiteren Leitern. Die Aussagen zum Verhältnis von Kanal-Leitern und weiteren Leitern lassen sich auf diese Ausführungsform übertragen und zwar indem die jeweils innere Lage der weiteren Leitern die Rolle der Kanal-Leiter einnimmt und die jeweils äussere Lage der weiteren Leiter die Rolle der weiteren Leiter gemäss der vorherigen Ausführungsform.

Bevorzugt gibt es 2 bis 3 Lagen weiterer Leiter. So lässt sich der Leiterquerschnitt einfach vergrössern, ohne dass die Kühleffizienz deutlich reduziert wird.

In einer Ausführungsform ist die Stützstruktur eine Helix oder ein offenes Profil. Das offene Profil hat insbesondere einen Stern-Querschnitt.

Eine Helix ist einfach herzustellen, leicht, flexibel und robust gegen Druck senkrecht zur Längsachse. Durch die Wahl der Ganghöhe lässt sich einstellen, wie gross die Fläche ist durch welche das Kühlfluid mit dem Leitergeflecht in Kontakt kommt, also wie effizient die Kühlung sein soll, und wie robust gegen Druck die Stützstruktur sein soll. Es ist möglich, dass eine Helix entlang ihrer Länge mehrere Ganghöhen hat. So kann eine Einzelleitung in Bereichen, die besonders überfahr gefährdet sind, eine Helix mit einer kleineren Ganghöhe aufweisen als in anderen Bereichen. Im Sinne einer einfachen Herstellung ist die Ganghöhe bevorzugt über die gesamte Länge konstant.

Bevorzugt ist die Steigung der Helix zwischen 0.1 und 0.3, besonders bevorzugt ist die Steigung in etwa gleich 0.2.

Eine Stützstruktur in der Form eines offenen Profils lässt sich ebenfalls leicht herstellen, beispielsweise durch Extrusion eines geeigneten Kunststoffs. Während eine Helix entlang ihrer Längsachse einen vergleichsweise grossen Kanal aufweist, können mit einem offenen Profil mehrere, kleinere Kanäle realisiert werden oder das Kühlfluid zum Fluss in einer Schraubenlinie gezwungen werden. Mit einem offenen Profil kann besser erreicht werden, dass die Kühlflüssigkeit sich durchmischt und nicht ein Teil quasi ohne Kontakt zur Leiteranordnung und ohne jede Wärmeaufnahme durch die Einzelleitung fliesst.

Ein Stern-Querschnitt stellt eine Form dar, die eine Verbindungsfläche und davon radial ausgehend mehrere Rippen aufweist. Die Rippen sind untereinander nur über die Verbindungsfläche verbunden. Bei einem Stern-Querschnitt erster Art ist die Verbindungsfläche ein Kreis und die Rippen haben alle dieselbe Länge. Ausserdem sind die Rippen in gleichen Winkelabständen zueinander angeordnet. In diesem Fall gibt es so viele Kanäle wie es Rippen gibt und alle Kanäle haben den gleichen Querschnitt.

Bei einem Stern-Querschnitt zweiter Art kann die Verbindungsfläche beliebig sein, die Rippen können unterschiedliche Längen haben und in unterschiedlichen Winkelabständen zueinander angeordnet sein. Wiederum gibt es so viele Kanäle wie Rippen, aber ihr Querschnitt kann stark voneinander abweichen.

Die Verbindungsfläche und die Rippen können Hohlräume aufweisen. Dies spart Gewicht.

In einer besonderen Ausführungsform ist die Stützstruktur eine Helix, deren Gängigkeit sich von der Gängigkeit der Schraubenlinien der Kanal-Leiter unterscheidet.

In einer besonderen Ausführungsform ist die Stützstruktur eine Helix und die Ganghöhe der Schraubenlinie eines der Kanal-Leiters ist grösser als die Ganghöhe der Stützstruktur.

In einer besonderen Ausführungsform ist die Stützstruktur eine Helix und das Ganghöhenverhältnis, welches die kleinste Ganghöhe der Schraubenlinie eines der Kanal-Leiter geteilt durch die Ganghöhe der Helix der Stützstruktur ist, grösser als 4/3, bevorzugt grösser als 2 und ganz besonders bevorzugt eine quasi-irrationale Zahl grösser als 4 und insbesondere grösser als 6.

In einer besonderen Ausführungsform ist das Ganghöhenverhältnis kleiner als 50.

In einer besonderen Ausführungsform ist die Stützstruktur eine Helix und die Ganghöhe der Schraubenlinie eines der Kanal-Leiters ist grösser als die Ganghöhe der Helix der Stützstruktur und die Gängigkeit der Helix der Stützstruktur unterscheidet sich von der Gängigkeit der Schraubenlinie der Kanal-Leiter.

In einer besonderen Ausführungsform ist die Stützstruktur eine Helix und das Ganghöhenverhältnis, welches die kleinste Ganghöhe der Schraubenlinie eines der Kanal-Leiter geteilt durch die Ganghöhe der Helix der Stützstruktur ist, grösser als 4/3, bevorzugt grösser als 2 und ganz besonders bevorzugt eine quais-irrationale Zahl grösser als 4 und die Gängigkeit der Helix der Stützstruktur unterscheidet sich von der Gängigkeit der Schraubenlinie der Kanal-Leiter.

All diese Ausführungsformen ergeben einen besonders stabilen Kanal, der auch im Gebrauch der Einzelleitung in einem Ladekabel Bestand hat. Ladekabel werden von Nutzern bewegt, in alle Richtungen gebogen und oft von Fahrzeugen überrollt. All dies kann zu Relativbewegungen zwischen Stützstruktur und Kanal-Leitern führen. Sind diese Relativbewegungen zu gross für die gewählte Einzelleitungs-Architektur, so können einzelne Kanal-Leiter ins Innere des Kanals rutschen. Dieses Ereignis wird als "Einbrechen" des Kanals bezeichnet. Die Abwesenheit des eingebrochenen Kanal-Leiters am ursprünglichen Ort gibt den umliegenden Kanal-Leitern mehr Bewegungsfreiheit, so dass weitere Kanal-Leiter ins Inne des Kanals rutschen können, es zu Schleifenbildung und anschliessendem Bruch der Leiter und ähnlichen Problemen kommen kann. Leiterbrüche und ein durch einen hineingerutschten Kanal-Leiter blockierten Kanal erhöhen den elektrischen und den Strömungs-widerstand der Einzelleitung. Beides führt zur einen Temperaturanstieg bei der Benutzung. Ein Ausfall des Ladesystems, in welchem die betreffende Leitung eingesetzt wird ist die Folge.

Daher soll die Einzelleitung so konstruiert sein, dass die Kanal-Leiter einerseits genügend locker um die Stützstruktur herum gewickelt sind um das Eindringen des Kühlfluid in die Räume zwischen Isolierung und Leiteranordnung und damit eine effiziente Kühlung zu erlauben und andererseits die Bewegung der Kanal-Leiter in keinem Fall zu einem Einbrechen des Kanals führt.

Eine Möglichkeit für eine solche Konstruktion ist die Gängigkeit der Helix der Stützstruktur und der Kanal-Leiter zu vertauschen: Es gibt in diesem Fall stets Punkte bei denen die Schraubenlinie der Kanal-Leiter über der Helix der Stützstruktur liegt. Ein Einbrechen über die gesamte Länge ist somit ausgeschlossen.

Eine weitere Möglichkeit ist es die Ganghöhe der Helix der Stützstruktur, kleiner und bevorzugt deutlich kleiner zu wählen als die Ganghöhe der Schraubenlinie der Kanal-Leiter: Ist zum Beispiel die Ganghöhe der Schraubenlinie der Kanal-Leiter 4/3 der Ganghöhe der Helix der Stützstruktur, so gibt es 3 Umläufe eines Kanal-Leiters und alle 4 Umläufe der Helix der Stützstruktur einen Punkt an dem der Kanal-Leiter auf der Stützstruktur voll aufliegt. Dies kann bei kleinen Ganghöhen und stabilen Kanal-Leitern genügen.

Deutlich stabiler wird das System aber bei einem Ganghöhenverhältnis von 2 oder mehr: Nun liegt der Kanal-Leiter mindestens einmal pro Umlauf auf der Stützstruktur auf. Bei einem Ganghöhenverhältnis von 4 oder grösser liegt der Kanal-Leiter jeden halben Umlauf mindestens einmal auf, wodurch eine "Einbruchsicherung" bei einer Verschiebung zu beiden Seiten gewährleitet ist. Mit zunehmendem Ganghöhenverhältnis nimmt der Winkel zu unter dem sich Kanal-Leiter und Stützstruktur am Auflagepunkt kreuzen: Ist das Ganghöhenverhältnis grösser als etwa 6, so lassen sich Kreuzungswinkel von über 45° erreichen: Ein "Abrutschen" des Kanal-Leiters von der Stützstruktur wird somit nochmals unwahrscheinlicher.

Besonders bevorzugt ist das Ganghöhenverhältnis eine quasi-irrationale Zahl: So wandern die Punkte an denen der Kanal-Leiter auf der Stützstruktur aufliegt entlang der Längsausdehnung des Kabels stets zu anderen Winkeln. Es gibt somit keine Richtung in welche eine Verschiebung des Kanal-Leiters gegenüber der Stützstruktur zu einem deutlichen Anstieg der Gefahr eines Kanaleinbruchs führen würde.

Speziell bevorzugt ist das Ganghöhenverhältnis eine quasi-irrationale Zahl grösser als 6. Beispielsweise kann das Ganghöhenverhältnis √(37) oder 6.1 oder √(44) oder 6.63, √(48) oder 6.93 gewählt werden, da diese Zahlen nicht nur quasi-irrational sind sondern auch noch einen gewissen Abstand zu den rationalen Zahlen mit einem Nenner kleiner oder gleich 7 aufweisen.

Kombiniert man die unterschiedliche Gängigkeit mit einem Ganghöhenverhältnis von mehr als 1, insbesondere von mehr als 4/3, bevorzugt von mehr als 2 und ganz besonders bevorzugt mit einer quasi-irrationalen Zahl grösser 4 und insbesondere grösser als 6, so erreicht man einen besonders stabilen und gleichzeitig sehr einfach herstellbaren Kanal.

Bevorzugt wird ist das Ganghöhenverhältnis kleiner als 50: Eine sehr hohe Ganghöhe der Schraubenlinien der Kanal-Leiter schränkt die Flexibilität der Einzelleitung deutlich ein. Auch eine sehr kleine Ganghöhe der Helix der Stützstruktur beschränkt die Flexibilität, reduziert den Fluss des Kühlfluids in den Bereich des Kabels zwischen Kanal und Isolierung und erhöht das Gewicht der Leitung und ist daher in vielen Fällen unerwünscht.

Mit der Ausführungsform eines Ganghöhenverhältnisses zwischen 4 und 50, das besonders bevorzugt eine quasi-irrationale Zahl ist, lässt sich eine sehr gute Einbruchsicherheit bei hoher Flexibilität gewährleisten.

In einer Ausführungsform ist die Stützstruktur ein offenes Profil, dessen Querschnitt in seiner Form und Grösse entlang der Längsausdehnung konstant bleibt, sich diese Form aber entlang der Längsausdehnung um eine Längsachse verdreht.

Ein solches Profil wird im Folgenden auch als verdrillt bezeichnet. Durch das Verdrehen entstehen Helix-förmige Kanäle. Ein Kühlfluid, welches durch diese Kanäle fliesst, bekommt somit einen Drall versetzt. Nahe bei der Längsachse ist der Weg kürzer als aussen. Es gibt also unterschiedliche Geschwindigkeiten im Fluid im Kanal und daraus resultierend eine stärkere Durchmischung des Kühlfluids. Das gesamte Volumen des Kühlfluids kann somit besser genutzt werden.

In einer Ausführungsform hat die konvexe Hülle der Stützstruktur einen Querschnitt mit einer Form, die entlang der Längsausdehnung der Stützstruktur im Wesentlichen gleich bleibt. Die Berührungspunkte der Stützstruktur mit ihrer konvexen Hülle bilden bei dieser Ausführungsform Stützstrukturlinien. Der Winkel, unter dem zumindest einige der Kanal-Leiter zumindest einige Stützstrukturlinien kreuzen, beträgt zwischen 45° und 135°, bevorzugt zwischen 60° und 120°.

Die Stützstrukturlinien stellen die Bereiche dar, wo die Kanal-Leiter auf der Stützstruktur aufliegen.

Ein Einbrechen der Kanäle die mit Hilfe der Stützstruktur gebildet werden kann insbesondere dann vorkommen, wenn ein Kanal-Leiter fast parallel zu seiner Auflagefläche auf der Stützstruktur verläuft.

Ein Einbrechen der Kanäle ist insbesondere dann zu befürchten, wenn alle Kanal-Leiter die Auflageflächen der Stützstruktur in einem flachen Winkel schneiden. Daher ist es bevorzugt, wenn zumindest einige der Kanal-Leiter die Auflageflächen, also die Stützstrukturlinien in einem Winkel von mehr als 45° schneiden. So wird ein Einbrechen der Kanäle auch bei Bewegung und unter Druck von aussen unwahrscheinlich.

Besonders bevorzugt kreuzen alle Kanal-Leiter zumindest einige Stützstrukturlinien in einem Winkel zwischen 45° und 135°, und besonders bevorzugt in einem Winkel zwischen 60° und 120°.

In dieser Ausführungsform ist es für jeden Kanal-Leiter quasi ausgeschlossen, dass er in einen der Kanäle einbricht. Die Einzelleitung wird nochmals robuster.

Der Winkel unter dem sich die Kanal-Leiter und die Stützstruktur kreuzen, also der Kreuzungswinkel, hängt in dem Fall in dem die Stützstruktur eine Helix ist und die Kanal-Leiter einer Schraubenlinie mit rundem Querschnitt folgen, sowohl von dem Ganghöhenverhältnis als auch von dem Verhältnis des Radius der Helix der Stützstruktur zur Ganghöhe der Helix der Stützstruktur ab. Ein Kreuzungswinkel von mehr als 45° lässt sich beispielsweise mit einem Ganghöhenverhältnis von √37 oder 6.1 und einem Radius der Helix vom 0.4-fachen der Ganghöhe der Helix der Stützstruktur erreichen.

Ein Kreuzungswinkel von mehr als 60° lässt sich beispielsweise mit einem Ganghöhenverhältnis von etwa 15, beispielsweise von √226 oder 15.05, und einem Radius der Helix vom 0.6-fachen der Ganghöhe der Helix der Stützstruktur erreichen

In einer Ausführungsform ist die Stützstruktur eine Helix aus Metall. Das Metall kann insbesondere Stahl sein. Bei dem Stahl handelt es sich insbesondere um Chrom-Nickel-Stahl.

Die meisten Metalle lassen sich zu einer Helix formen und leiten Strom und können so einerseits die Stützfunktion der Stützstruktur übernehmen und andererseits einen Teil des Stromes leiten.

Ein Stahldraht lässt sich vergleichsweise einfach in die gewünschte Form bringen. Eine Helix aus Stahl ist flexibel und formstabil. Ausserdem ist diese Stützstruktur vergleichsweise unempfindlich gegenüber Wärme, so dass eine Einzelleitung konstruiert werden kann, die beim Ausfall des Kühlmittels nicht oder erst nach längerer Zeit beschädigt wird. Chrom-Nickel-Stahl ist rostfrei und hat sich in Versuchen als besonders gut geeignet herausgestellt, da diese Stützstruktur einfach verarbeitet werden kann und sich mit einer Vielzahl von möglichen Kühlfluiden und Kanal-Leitermaterialien einsetzen lässt.

Kupfer leitet den Strom gut. Eine Helix aus Kupfer kann daher selbst einen Teil des Stromes leiten. So kann etwas Material gespart werden, was das Kabel leichter macht. Neben Kupfer eignen sich auch Kupferlegierungen.

Auch Aluminium leitet Strom gut und kann zu einer Helix geformt werden.

In einer Ausführungsform sind die Leiter der Einzelleitung, insbesondere die Kanal-Leiter, aus Kupfer. Bevorzugt bestehen die Kanal-Leiter aus unbeschichteten oder verzinnten Kupferdrähten.

Kupfer ist ein guter und üblicher Leiter, sowohl für Strom als auch für Wärme, und vergleichsweise duktil. Silber weist eine noch bessere Leitfähigkeit auf, ist aber weniger wirtschaftlich. Aluminium ist ebenfalls ein guter Leiter, allerdings weniger gut als Kupfer. Dafür ist Aluminium weniger dicht als Kupfer. Mit Aluminiumleitern wäre das Kabel also leichter.

Mit dem Begriff Kupfer sollen bevorzugt Kupferwerkstoffe mit einem Mindestgehalt von 99.5%, besonders bevorzugt 99.9% Gewichtsprozent Cu gemeint sein.

Das Verzinnen hat den Vorteil, dass die Drähte vor Korrosion geschützt sind. Auf das Verzinnen oder eine andere Art der Beschichtung kann aber, je nach Wahl des Kühlfluids, auch verzichtet werden. Dies ist insbesondere der Fall, wenn das Kühlfluid mit Zusätzen versehen ist, die einen Korrosionsschutz bilden. Unverzinnte und anderweitig unbeschichtete Drähte sind günstiger als verzinnte Drähte.

Bei der Nutzung von unbeschichteten Drähten erfüllt das Kühlfluid also mindestens zwei Aufgaben: Es ist der Korrosionsschutz der Drähte aus denen die Leiter bestehen und es kühlt die Leiter.

In einer Ausführungsform ist die Isolierung eine faserverstärkte Isolierung.

Die Isolierung soll einerseits das Kühlfluid im Inneren der Einzelleitung halten und andererseits die Leiter gegenüber der Umwelt elektrisch isolieren. Gleichzeitig soll die Flexibilität der Einzelleitung durch die Isolierung möglichst wenig eingeschränkt werden. Die Isolierung besteht daher üblicherweise aus einem flexiblen Kunststoff, beispielsweise EPDM, EPR oder TPE.

Während die Flexibilität des Kunststoffes hilft die Flexibilität der Einzelleitung als Ganzes kaum einzuschränken, so führt sie doch auch dazu, dass sich der Kabelmantel unter dem Druck des Kühlfluids im Betrieb weitet. Eine gewisse Aufweitung von zum Beispiel nicht mehr als 10% des Aussenradius in der Abwesenheit von Kühlfluids ist durchaus vorteilhaft, da so Öffnungen entstehen in welchen das Kühlfluid fliessen kann.

Weitet sich die Isolierung aber mehr als gewünscht so kann dies einerseits zu Schäden an der Isolierung führen und andererseits den Druck in der Einzelleitung ungewollt stark abfallen lassen. Um die Aufweitung auf ein gewünschtes Mass zu begrenzen wird daher bevorzugt eine faserverstärkte Isolierung genutzt, bei der in oder um den Kunststoff herum Fasern angeordnet werden.

In einer Ausführungsform umfasst die faserverstärkte Isolierung Fasern mit einem hohen E-modul und einer guter Temperaturbeständigkeit, die in einen elektrisch isolierenden Kunststoff eingebettet sind.

Der elektrisch isolierende Kunstsoff umfasst insbesondere Ethylen-Propylen-Dien-Kautschuke (EPDM), Ethylen-Propylen-Kautschuke (EPR) und/oder thermoplastische Elastomere (TPE).

Das E-modul der Fasern ist bei 20°C bevorzugt höher als 50 GPa. Die Fasern sind bevorzugt bis über 100°C temperaturbeständig. Besonders bevorzugt handelt es sich um Aramidfasern, insbesondere Poly(p-phenylenterephthalamid)-fasern, Hanffasern oder Polyethylenfasern.

In einer besonderen Ausführungsform besteht die faserverstärkte Isolierung aus Aramidfasern in Ethylen-Propylen-Kautschuk (EPR) oder aus Hanffasern in Ethylen-Propylen-Kautschuk (EPR).

Anders als bei üblichen elektrischen Kabeln ist die Isolierung der Einzelleitungen auch einem, möglicherweise hohen, Innendruck durch das Kühlfluid ausgesetzt. Die Faserverstärkung nimmt einen Teil dieses Innendrucks auf und erhöht so die Zuverlässigkeit der Isolierung.

Fasern mit einem hohen E-modul und einer guten Temperaturbeständigkeit eignen sich besonders gut dazu das Aufweiten der Einzelleitung zu kontrollieren und zwar auch dann noch, wenn sich die Einzelleitung aufgrund von besonderen Umständen stärker erhitzt als vorgesehen. In einer Ausführungsform liegen die Fasern auf der Aussenseite der Isolierung an. Sie können dort beispielsweise mit einem Lack oder einem Schutzmantel vor Abrieb geschützt werden. Bevorzugt sind die Fasern aber in die Isolierung eingebettet. So sind sie in einer Art und Weise vor Umwelteinflüssen und Abrieb geschützt, ohne, dass es einen Materialübergang und die damit verbundenen Haltbarkeitsschwierigkeiten gibt.

Die beiden Kombinationen "Aramidfasern in EPR" und "Hanffasern in EPR" haben sich als besonders geeignet und haltbar erwiesen.

In einer Ausführungsform sind die Fasern der faserverstärkten Isolierung zu einem Geflecht verwoben.

Eine Faserverstärkung der Isolierung kann auch durch ein zufälliges Einstreuen von Fasern oder ein Umwickeln der Isolierung mit Fasern oder Garnen geschehen. Die Nutzung eines Geflechts hat aber den Vorteil, dass sich auf einfach Art eine homogene und drallfreie Stützung der Isolierung herstellen lässt die eine Aufweitung bis zu einem bestimmten Grad zulässt und das weitere Aufweiten der Isolierung dann wirksam verhindert.

In einer Ausführungsform befinden sich die Fasern auf der Aussenseite der Isolierung befinden. Die Isolierung und die darauf befindlichen Fasern sind in dieser Ausführungsform von einem elektrisch isolierenden Einzelleitungsmantel umhüllt.

Bevorzugt gleichen sich der Einzelleitungsmantel und die Isolierung in ihrer Zusammensetzung weitgehend, wobei der Mantel aber anders gefärbt sein kann. Die gleichartige Materialwahl verhindert Spannungen an der Grenzfläche von Isolierung und Einzelladungsmantel, da beide gleich auf Temperaturänderungen und mechanische Belastungen reagieren. Die unterschiedliche Farbwahl erlaubt es Beschädigungen des Einzelladungsmantels klar zu erkennen.

Der Einzelleitungsmantel kann in seiner Materialwahl aber auch deutlicher von der Isolierung abweichen und beispielswiese speziell für die Resistenz gegenüber speziellen Umweltbedingen ausgerüstet sein.

In einer Ausführungsform einer faserverstärkten Isolierung einer Einzelleitung sind die Fasern sich im Wesentlichen in einer Lage angeordnet. In dieser Lage bedecken sie zwischen 30 und 90%, bevorzugt zwischen 50 und 70% besonders bevorzugt etwa 60% der Fläche der Lage bedecken.

Bedecken die Fasern einen zu geringen Anteil der Fläche der Lage in der sie angeordnet sind, so besteht die Gefahr, dass sie sich in den Mantel einschneiden. Bedecken die Fasern die Fläche zu dicht, kann die Flexibilität der Einzelleitung sinken.

In einer Ausführungsform ist das Verhältnis des freien Volumens der Einzelleitung zum Volumen der Leiter grösser als 0.25, bevorzugt grösser als 1, besonders bevorzugt grösser als 1.5 .

Bevorzugt ist das Verhältnis des freuen Volumens der Einzelleitung zum Volumen der Leiter kleiner als 3, und insbesondere kleiner als 2.

Das freie Volumen der Einzelleitung stellt dabei insbesondere dasjenige Volumen im Inneren der Isolierung dar, welches weder durch Leiter, insbesondere durch die Kanal-Leiter, noch durch die Stützstruktur eingenommen wird und welches folglich im Betrieb vom Kühlfluid durchflossen werden kann.

Es hat sich herausgestellt, dass eine effektive Kühlung der Leiter insbesondere dann erfolgen kann, wenn das Volumenverhältnis grösser als 0.25 ist. Nimmt das Volumenverhältnis zu, so bedeutet dass das mehr Kühlfluid auch ohne grossen Druck durch die Einzelleitung strömen kann. Ein grösseres Volumenverhältnis ermöglicht also auch dann eine gute Kühlung, wenn das Kühlfluid nur mit beschränktem Druck eingebracht werden kann. Gleichzeitig wird die Einzelleitung durch viel Kühlfluid, wie es sich bei einem grossen Volumenverhältnis im Betrieb ergibt, schwer, dick und unhandlich, so dass sich als bevorzugte Obergrenze ein Verhältnis von 3 und bevorzugt von 2 ergibt.

Ein erfindungsgemässes Ladekabel umfasst eine erste und eine zweite erfindungsgemässe Einzelleitung und einen gemeinsamen Schutzmantel.

Der gemeinsame Schutzmantel hält die beiden Einzelleitungen zusammen und schützt sie vor Abrieb und Umwelteinflüssen wie UV-Strahlung, Treibstoffresten, Scherben und ähnlichem. Der Schutzmantel kann mehrschichtig ausgebildet sein und dabei einzelne Schichten in unterschiedlicher Färbung beinhalten, so dass ein kritischer Abrieb einfach erkannt werden kann. Der Schutzmantel kann mit dünnen Prüfleitungen durchzogen sein, mit deren Hilfe eine übermässige Wärme und/oder eine Beschädigung des Kabels erkennt werden kann, beispielsweise durch einen Anstieg des elektrischen Widerstand in diesen Prüfleitungen. Der Schutzmantel kann stellenweise oder insgesamt verstärkt werden oder zur besseren Greifbarkeit mit Strukturen oder Beschichtungen versehen sein. Der Schutzmantel kann ausserdem wärmeisolierend sein, um beispielsweise ein Einfrieren des Kühlfluids, insbesondere wenn Wasser genutzt wird, bei tiefen Aussentemperaturen zu verhindern und insbesondere auch, um während des Gebrauchs die endstehende Wärme primär über das Kühlfluid abzuleiten und eine übermässige Erhitzung der Aussenseite des Schutzmantels zu verhindern.

In einer Ausführungsform umhüllt der gemeinsame Schutzmantel die Einzelleitungen nur abschnittsweise, beispielsweise in regelmässigen Abständen und/oder dort wo besondere Belastungen befürchtet werden. Bevorzugt umhüllt der gemeinsame Schutzmantel die erste und die zweite erfindungsgemässe Einzelleitung im Wesentlichen auf ihrer gesamten Länge.

Bevorzugt sind die erste und die zweite erfindungsgemässe Einzelleitung gleich aufgebaut und unterscheiden sich, wenn überhaupt, nur in der Färbung ihrer Isolierung. In einer anderen Ausführungsform unterscheiden sich die erste und die zweite erfindungsgemässe Einzelleitung in ihrer Stützstruktur, in der Gestaltung der Leiteranordnung und/oder in ihrer Abmessung.

In einer Ausführungsform umfasst ein Ladekabel weiter ein Erdleitergeflecht, das die erste und die zweite Einzelleitung umgibt und vom gemeinsamen Schutzmantel umhüllt ist oder in diesen integriert ist.

Das Erdleitergeflecht ist ein Geflecht aus elektrisch leiteten Drähten.

Dieses Erdleitergeflecht kann als Neutralleiter und/oder Abschirmung dienen, je nach Betriebsart des Ladekabels. Ausserdem kann es dazu dienen, eine Beschädigung des Kabels oder ein Überhitzen festzustellen.

Ist das Erdleitergeflecht in den Schutzmantel integriert, so befindet sich Material des Schutzmantels unter- und oberhalb des Erdleitergeflechts. So ist das Erdleitergeflecht geschützt und kann dazu verwendet werden, Beschädigungen des Kabels oder eine hohe Manteltemperatur festzustellen.

Liegt das Erdleitergeflecht hingegen innerhalb des vom Schutzmantel definierten Hohlraumes aber ausserhalb vom Schutzmantel selbst, so ist es flexibler.

Das Erdleitergeflecht kann ausserdem auf der Innenseite des Schutzmantels befestigt sein.

Alternativ oder zusätzlich umfasst das Ladekabel einen Erdleiter in der Form von nebeneinander angeordnete Drähten oder Litzen oder Bündeln, die in den gemeinsamen Schutzmantel integriert sind und die beiden Einzelleitungen gemeinsam umwickeln. Bevorzugt umfasst ein solcher Erdleiter mehrere Gruppen solcher nebeneinander angeordneten Drähte, Litzen oder Bündel die durch Abschnitte von Schutzmantelmaterial voneinander getrennt, welche keinerlei Drähte oder Litzen oder Bündel enthalten.

Diese Ausführungsform hat den Vorteil, dass der Erdleiter neben seiner Leiterfunktion, die derjenigen des oben beschriebenen Erdleitergeflechts gleicht, auch zur mechanischen Stabilität des Ladekabels beiträgt:
Bevorzugt werden nämlich die beiden Einzelleitungen und weiteren Bestandteile, hier als Innenleben bezeichnet, des Ladekabels vor dem Aufbringen des Schutzmantels miteinander verdrillt: So ergibt sich ein rundes und flexibles Ladekabel. Ohne entgegengesetzte Umwindung könnte sich das Ladekabel unter Zugbelastung aufdrehen. Ein Erdleiter in Form von nebeneinander angeordneten Drähten oder Litzen kann das Innenleben gemeinsam umwickeln und zwar in der Gegenrichtung des Verdrillens des Innenlebens. Der Erdleiter stellt so die Umwindung des Ladekabels dar.

In einer Ausführungsform eines Ladekabels umfasst dieses einen Erdleiter, der aus verdrillten Drähten besteht, zusammen mit den beiden Einzelleitungen verdrillt ist und der vom gemeinsamen Schutzmantel umhüllt wird. Bevorzugt umfasst dieser Erdleiter ausserdem eine elektrisch isolierende Erdleiterisolierung.

Bevorzugt umfasst das Ladekabel sowohl einen ersten Erdleiter, der gemeinsam mit den beiden Einzelleitungen verdrillt ist, als auch einen zweiten Erdleiter der die beiden Einzelleitungen und den ersten Erdleiter gemeinsam umgibt.

Der zweite Erdleiter kann ein Erdleitergeflecht sein, das die erste und die zweite Einzelleitung und den ersten Erdleiter umgibt und vom gemeinsamen Schutzmantel umhüllt ist oder in diesen integriert ist und/oder ein Erdleiter in der Form von nebeneinander angeordnete Drähten oder Litzen, die in den gemeinsamen Schutzmantel integriert sind und die beiden Einzelleitungen und den ersten Erdleiter gemeinsam umwickeln.

Ein solcher erster Erdleiter kann ein übliches Stromkabel sein. Ein Ladekabel welches den Erdleiter auf diese Art integriert ist besonders einfach herstellbar und kostengünstig.

Bevorzugt liegt der erste Erdleiter ausserhalb der Einzelleitungen. Bevorzugt liegt der Erdleiter ausserhalb eines Schlauches.

Der erste Erdleiter zählt zum Innenleben des Ladekabels.

In einer Ausführungsform umfasst das Ladekabel Signalkabel. Bevorzugt werden Signalkabel in Gruppen zusammengefasst, deren Mitglieder in unmittelbarer räumlicher Nähe zueinander stehen und sich bevorzugt berühren. Besonders bevorzugt umfassen die Gruppen jeweils genau drei Signalkabel.

In einer Ausführungsform umfasst ein Ladekabel ein oder mehrere Signalkabel, die bevorzugt in einer gemeinsamen Hülle angeordnet sind. Die Signalkabel sind, bevorzugt in der gemeinsamen Hülle, innerhalb des gemeinsamen Schutzmantels angeordnet. Jedes Signalkabel weist einen Signalleiter und eine Schutzschicht auf. Die Schutzschicht umhüllt den Signalleiter.

Bei mindestens einem der Signalkabel besteht der Signalleiter aus Leitern in Form von Drähten. Der Leiterquerschnitt des Signalleiters ist kleiner als 1/20, bevorzugt kleiner als 1/40 des Leiterquerschnitts der ersten Einzelleitung. Die Schutzschicht ist elektrisch isolierend.

Typischerweise gibt es mehrere Signalkabel. Durch das Zusammenfassen in einer gemeinsamen Hülle werden der Aufbau und das Anschliessen des Ladekabels vereinfacht, da alle Signalkabel räumlich dicht beieinander liegen. Neben Signalleitern aus Leitern können Signalleiter aus Glasfasern genutzt werden.

Signalleiter aus Leitern sollen wesentlich weniger Leistung übertragen als die Einzelleitungen. Daher ist ihr Leiterquerschnitt deutlich geringer.

Die Signalkabeln jeweils einer Gruppe werden bevorzugt zunächst untereinander verdrillt, bevor die Gruppen von Signalkabeln mit den beiden Einzelleitungen und weiteren Bestandteilen des Innenlebens des Ladekabels verdrillt werden und anschliessend besonders bevorzugt von einem zweiten Erdleiter und dem gemeinsamen Schutzmantel umhüllt werden.

In einer Ausführungsform umfasst ein Ladekabel mindestens einen Schlauch, bevorzugt zwei, drei oder vier Schläuche, aus einem fluiddichten Material. Die Schläuche befinden sich innerhalb des gemeinsamen Schutzmantels, aber ausserhalb der ersten oder zweiten Einzelleitung.

Die Schläuche dienen dazu Kühlfluid ausserhalb der Einzelleitungen zu transportieren. Die Schläuche zählen zum Innenleben des Kabels. In einer bevorzugten Ausführungsform umfasst das Ladekabel genau zwei Schläuche mit gleichem Innen- und Aussendurchmesser.

Als Material für Schläuche eignen sich unter anderem Polypropylen, Polyurethan (PUR), EPDM, Nylon, Polyamide und Silikone. Das Material sollte für das verwendete Kühlfluid geeignet sein, flexibel sein und einem hohen Innendruck standhalten können. Die Schläuche können faserverstärkt sein.

In einer ersten Ausführungsform wird das Kühlfluid durch die Einzelleitungen gepumpt und tritt am Ende des Kabels aus und wir entsorgt. Dieses Vorgehen bietet sich beispielsweise mit Luft als Kühlfluid an.

In einer anderen Ausführungsform wird das Kühlfluid durch die erste Einzelleitung hin und durch die zweite Einzelleitung zurück transportiert.

In einer weiteren Ausführungsform wird das Kühlfluid durch beide Einzelleitungen hin und durch ein oder zwei Schläuche zurück transportiert.

In einer weiteren Ausführungsform umfasst das Kabel zusätzlich zwei Schläuche, die die Hin- und Rückleitung zu einer Steckerkühlung darstellen.

In einer weiteren Ausführungsform umfasst das Kabel zwei Schläuche, von denen einer die Hinleitung zu einer Steckerkühlung darstellt und der andere die Rückleitung für Kühlfluid aus der Steckerkühlung und aus den beiden Einzelleitungen darstellt.

Unter einer Hinleitung ist hier eine Kanal oder ein Schlauch zu verstehen, der von einer Pumpe oder einem Ort mit hohem Fluiddruck weg führt. Unter einer Rückleitung ist hier ein Kanal oder ein Schlauch zu verstehen, der zu einer Pumpe oder einem Ort mit tiefem Fluiddruck hin führt. Bevorzugt wechselt die Zuordnung, was zur Hin- und was zur Rückleitung gehört auf halben Weg des Kühlfluids vom Ausgang der Pumpe zurück zu ihrem Eingang oder auf halben Weg vom Ort des hohen Fluiddrucks zum Ort des tieferen Fluiddrucks. Der hohe Fluiddruck ist hier ein Druck der höher ist als der tiefe Fluiddruck.

Die Schläuche können unterschiedlich grosse Durchmesser haben. Der Durchmesser der Schläuche wird gewählt in Abhängigkeit der Platzverhältnisse und der gewünschten Geschwindigkeit des Fluids bei der gewünschten Durchflussrate.

Der oder die Schläuche können einen runden oder einen nicht-runden Querschnitt haben. Schläuche mit rundem Querschnitt sind einfacher herzustellen und in einer grossen Vielfalt erhältlich. Schläuche mit nicht rundem Querschnitt können hingegen die Platzverhältnisse im Ladekabel optimal ausnutzen.

In einer Ausführungsform liegen die Einzelleitungen in einem Schlauch. In dieser Ausführungsform kann der gemeinsame Schutzmantel den Schlauch darstellen.

Ein Schlauch, im Sinne dieser Erfindung, ist dafür vorgesehen, Kühlfluid zu transportieren. Seine Enden sind daher insbesondere fluiddicht anschliessbar und er besteht aus fluiddichtem Material. Bevorzugt ist das Schlauchinnere frei, abgesehen vom Kühlfluid im Betrieb.

In einer Ausführungsform umfasst ein Ladekabel ein oder mehrere der folgenden Bestandteile: Erdleiter, Signalkabel, Schlauch, Beilauf.

Jeder dieser Bestandteile weist einen im Wesentlichen kreisförmigen Querschnitt auf und dieser Querschnitt hat einen Umkreisradius.

Die erste und die zweite Einzelleitung haben jeweils einen runden Querschnitt und die Querschnitte der ersten und der zweiten Einzelleitung haben den gleichen Umkreisradius R.

Der Umkreisradius von jedem der vorkommenden Bestandteile ist kleiner oder gleich des Umkreisradius R der ersten Einzelleitung ist und bevorzugt kleiner oder gleich 2/3 des Umkreisradius R der ersten Einzelleitung.

Die Bestandteile gehören zum Innenleben des Ladekabels.

In einer bevorzugten Ausführungsform ist der Umkreisradius von Schlauch und Beilauf jeweils im Wesentlichen gleich 1/3 oder 2/3 des Umkreisradius R der ersten Einzelleitung. Insbesondere gibt es nicht mehr als zwei Bestandteile mit einem Umkreisradius von 2/3 des Umkreisradius R der ersten Einzelleitung und nicht mehr als vier Bestandteile mit einem Umkreisradius von 1/3 des Umkreisradius R der ersten Einzelleitung in einem Ladekabel dieser Ausführungsform.

Gemäss dieser Ausführungsform bestimmen die Einzelleitungen den Umfang des Ladekabels und das vorliegende Ladekabel hat einen runden Querschnitt. Alle weiteren Bestandteile teilen sich den Platz, der sich innerhalb des Umkreises um die beiden Einzelleitungen ergibt. Diese Ausführungsform hat den Vorteil, dass die vergleichsweise stabilen Einzelleitungen das gesamte Kabel gegen Druckbelastung in zumindest eine Richtung stützen. Durch die optimale Raumnutzung ist der Umfang des Kabels so klein wie möglich, was seine Greifbarkeit verbessert.

Der Beilauf besteht aus verdrillten oder parallel verlaufenden Fasern oder Streifen und hat die Funktion, das Kabel in Form zu halten und ist im Wesentlichen ein Füllstoff. Der Beilauf kann aber auch dazu genutzt werden, mechanische Zugkräfte auf das Kabel aufzunehmen. Er dient also unter anderem der Überrollfestigkeit. Der Beilauf besteht insbesondere aus einem günstigen thermoplastischen Material, welches keine Halogene aufweist. Beispiele für solche Materialien sind Polypropylen und Polyethylen.

Bevorzugt sind alle Bestandteile des Innenlebens miteinander verdrillt.

Ein Anschlusssystem umfasst eine Einzelleitung und zwei Anschlussteile. Jedes der beiden Anschlussteile umfasst jeweils einen Fluidanschluss und einen Elektroanschluss.

Der Fluidanschluss ermöglicht den Zu- und Abfluss eines Fluids in und aus der Einzelleitung. Der Elektroanschluss stellt einen Pfad zur Übertragung von elektrischer Energie zwischen einem Abgreifpunkt und den Leitern der Einzelleitung her.

Bevorzugt ist jedes der Anschlussteile als Kammer ausgebildet. Die Kammer weist eine erste Öffnung zum fluiddichten Anschliessen der Einzelleitung auf. Die Kammer weist eine zweite Öffnung zum Anschliessen einer Fluidleitung auf. Dies ist der Fluidanschluss. Innerhalb der Kammer befindet sich ein elektrischer Kontakt zur Herstellung einer elektrischen Verbindung mit den Leitern der Einzelleitung. Dieser elektrische Kontakt im Kammerinneren ist mit einer Stromleitung verbunden die zum Abgreifpunkt führt. Dies ist der Elektroanschluss.

Das Anschlusssystem erlaubt es die erfindungsgemässe Einzelleitung sowohl in einem Kühlfluidkreis als auch in einem Stromkreis einzusetzen.

Ein Ladesystem umfasst ein erstes und ein zweites Anschlusssystem. Das erste Anschlusssystem umfasst die erste Einzelleitung des Ladekabels und das zweite Anschlusssystem umfasst die zweite Einzelleitung des Ladekabels. Ein erstes Ende der erst Einzelleitung und ein erstes Ende der zweiten Einzelleitung befinden sich am ersten Ende des Ladekabels. Ein zweites Ende der ersten Einzelleitung und ein zweites Ende der zweiten Einzelleitung befinden sich am zweiten Ende des Ladekabels. Der Endanschluss umfasst das Anschlussteil am ersten Ende der ersten Einzelleitung und das Anschlussteil am ersten Ende der zweiten Einzelleitung. Der Stecker umfasst das Anschlussteil am zweiten Ende der ersten Einzelleitung und das Anschlussteil am zweiten Ende der zweiten Einzelleitung.

Das Ladesystem erlaubt es das erfindungsgemässe Ladekabel in einem Stromkreis einzusetzen, bei dem die genutzten Einzelleitungen gekühlt werden.

In einer Ausführungsform des Ladesystems sind die Fluidanschlüsse der beidem Anschlussteile, die der Stecker umfasst, derart miteinander verbunden, dass Fluid aus dem einen Fluidanschluss in den anderen fliessen kann.

Der Stecker stellt also eine Fluidverbindung zwischen den beiden Einzelleitungen her. Während der Fluidkreislauf somit beim Stecker geschlossen wird, wird der Stromkreislauf weiter zum Verbraucher oder zu einem Energiespeicher geführt.

Kühlfluid fliesst im Betrieb dieser Ausführungsform durch eine Einzelleitung zum Stecker und durch die andere Einzelleitung zurück zum Anschlussteil.

In einer Ausführungsform des Ladesystems ist jeder der Fluidanschlüsse der beiden Anschlussteile, die der Stecker umfasst, jeweils mit einem Schlauch eines Ladekabels verbunden.

Der Stecker stellt also eine Fluidverbindung zwischen jeweils einer Einzelleitung und einem Schlauch her. Während der Fluidkreislauf somit beim Stecker geschlossen wird, wird der Stromkreislauf weiter zum Verbraucher oder zu einem Energiespeicher geführt.

Kühlfluid fliesst im Betrieb dieser Ausführungsform durch eine Einzelleitung zum Stecker und durch einen Schlauch zurück zum Anschlussteil oder umgekehrt.

In einer Ausführungsform des Ladesystems ist zumindest der Fluidanschluss eines der beiden Anschlussteile, bevorzugt die Fluidanschlüsse beider Anschlussteile, die den Endanschluss bilden, mit einer Fluidleitung zu einer externen Fluidquelle verbunden.

Auf diese Art kann eine Einzelleitung des Ladesystems mit Kühlfluid versorgt werden.

Bevorzugt sind beide Fluidanschlüsse mit der Fluidquelle verbunden und Schläuche führen das Kühlfluid vom Stecker zurück zur Fluidquelle. In dieser Ausführungsform wird im Betrieb das Kühlfluid in der Fluidquelle gekühlt und mit Druck beaufschlagt über die Fluidanschlüsse zurück in die Einzelleitungen eingebracht.

Das Ladesystem umfasst ein Ladekabel mit mindestens zwei Schläuchen zur Versorgung einer Steckerkühlung und einen Stecker mit einer Steckerkühlung. Der Stecker umfasst zwei Schlauchanschlüsse. Die Steckerkühlung umfasst mindestens eine Kühlleitung, die die beiden Schlauchanschlüsse miteinander verbindet. So kann über einen der mindestens zwei Schläuche Kühlfluid in die Kühlleitung der Steckerkühlung eingebracht werden und dieses Kühlfluid kann durch einen anderen der mindestens zwei Schläuche wieder abfliessen.

Grosse Wärme entsteht vor allem dort, wo der elektrische Widerstand hoch ist. Dies ist oft an Kontaktflächen und bei Verbindungsstellen der Fall, also gerade im Bereich des Steckers. Teile des Steckers sollten aber für den Benutzer anfassbar bleiben und somit eine Oberflächentemperatur von weniger als 40°C aufweisen. Andere Teile, insbesondere Verbindungsstellen der Leiter, können durch zu hohe Temperaturen versagen. Um dies zu verhindern, bietet sich die Nutzung einer Steckerkühlung an. Diese kann entweder das Kühlfluid der Einzelleitungen nutzen, oder aber eigene Kühlfluidversorgungsleitungen aufweisen. Die Nutzung des Kühlfluids der Einzelleitungen in der Steckerkühlung erlaubt eine kompakte Bauweise des Kabels, da keine weiteren Schläuche benötigt werden. Soll mit der Steckerkühlung aber primär die Oberflächentemperatur gesenkt werden, damit der Nutzer den Stecker anfassen kann, so ist die Versorgung der Steckerkühlung durch zwei Schläuche effizienter: Für die Oberflächentemperatur von Ladekabel und Stecker gilt bevorzugt der gleiche Sollwert. Die Durchflussrate des Kühlfluids kann nun gerade so gewählt werden, dass dieser Sollwert am Ende des Kabels erreicht wird. Im Allgemeinen kann mit einem derart aufgewärmten Kühlfluid nun aber nicht auch noch der Stecker auf den Sollwert gesenkt werden. Stattdessen müssten die Kabel, in der Variante ohne Schläuche zur Versorgung der Steckerkühlung, stärker als gewünscht gekühlt werden, um den Stecker auf der Solltemperatur zu halten. Diese stärkere Kühlung bedeutet eine höhere Durchflussrate und damit höhere Fluidgeschwindigkeiten und/oder ein grösseres freies Volumen in den Einzelleitungen. Höhere Fluidgeschwindigkeiten und damit höhere Drücke machen das Ladekabel weniger flexibel; Grosse freie Volumen machen das Ladekabel weniger handlich und schwer. Letztendlich kann für einen Sollstrom, eine gewünschte höchste Oberflächentemperatur, ein Länge des Kabels und ein gegebenes Steckerdesign berechnet werden, ob eine Kühlung des Steckers über das Kühlfluid der Einzelleitungen oder über Versorgungsschläuche im konkreten Fall das kompaktere Ladekabel mit ausreichender Flexibilität ergibt.

Ein erfindungsgemässes Verfahren zum Laden eines Energiespeichers, insbesondere einer Batterie eines Fahrzeugs, an einer stationäre Ladestation, die Kühlfluid und elektrische Energie zur Verfügung stellen kann und an welche ein erstes Ende eines erfindungsgemässen Ladekabels angeschlossen ist, umfasst die folgenden Schritte:
Anschliessen eines zweiten Endes des Ladekabels an den Energiespeicher, insbesondere an die Batterie des Fahrzeuges.

Einbringen eines Kühlfluids unter Druck, insbesondere Pumpen des Kühlfluids, in die Kanäle der Einzelleitungen des Ladekabels.

Übertragen von elektrischer Energie über die Kanal-Leiter und gegebenenfalls die weiteren Leiter der Einzelleitungen des Ladekabels .

Dabei werden insbesondere Signalkabel des Ladekabels zur Übertragung von Signalen zur Steuerung und/oder Überwachung des Ladevorganges und/oder des Ladezustands des Energiespeichers, insbesondere der Batterie, genutzt.

In einer Ausführungsform umfasst das Verfahren ausserdem das Kühlen des Kühlfluids bevor es in die Kanäle der Einzelleitungen des Ladekabels eingebracht wird.

Durch die Nutzung von gekühltem Kühlfluid können noch höhere Ströme mit dem Ladekabel übertragen werden und das Ladeverfahren wird unabhängig von der Temperatur, mit der das Kühlfluid zur Verfügung gestellt wird.

Bei dem Energiespeicher des Fahrzeuges handelt es sich insbesondere um eine Batterie zum Antrieb des Fahrzeuges. Das Anschliessen des Ladekabels an die Batterie des Fahrzeuges geschieht bevorzugt durch einen Stecker, der am Ladekabel montiert ist und eine Steckdose, die am Fahrzeug montiert ist und die mit der Batterie verbunden ist. Der Stecker kann zum Anschliessen in die Steckdose gesteckt werden.

Das Einbringen des Kühlfluids unter Druck geschieht bevorzugt durch eine lokal an oder in der Ladestation angebrachte Pumpe. Es ist aber auch möglich, dass die Ladestation an einen Tank oder eine Leitung angeschlossen ist, die Kühlfluid mit einem bestimmten Druck zur Verfügung stellt. Beispielweise ist eine Versorgung mit dem Kühlfluid Wasser und einem Wasserturm denkbar, wobei das Wasser zeitlich und räumlich von der Ladestation und dem Ladevorgang getrennt, in ein höher gelegenes Reservoir gepumpt wird und dann mit dem gewünschten Druck der Leitung entnommen und direkt in die Einzelleitungen eingeleitet wird.

Die Signalkabel können eine Kommunikation zwischen Fahrzeug und Ladestation herstellen. So kann die Ladestation beispielsweise bei Fehlermeldungen den Stromfluss unterbrechen oder vor Beginn des Ladens den korrekten Anschluss des Ladekabels an die Batterie des Fahrzeuges prüfen. Die Signalkabel können aber auch zur Überwachung des Ladekabels selbst dienen, indem sie Sensorsignale von Sensoren im Stecker oder von Sensoren im Kabel zur Ladestation leiten. Stellt ein Sensor beispielsweise eine Temperatur oberhalb einer bestimmten Schwelle fest, so kann die Ladestation den Kühlfluidfluss erhöhen oder den Ladevorgang unterbrechen.

Das erfindungsgemässe Verfahren zur Herstellung einer Einzelleitung umfasst die folgenden Schritte, die bevorzugt nacheinander in einer Fertigungslinie ausgeführt werden:
a) Das zur Verfügungstellen einer offenen Stützstruktur und mehrere Kanal-Leiter als Endlosmaterial.
b) Das Wickeln der Kanal-Leiter auf die Stützstruktur.
c) Bevorzugt, das Wickeln weiterer Leiter um die in Schritt b) erzeugte Struktur.
d) Das Koextrudieren der Isolierung um das Ergebnis von Schritt b) oder c).
e) Bevorzugt, das Weben eines Geflechts aus Fasern oder Wickeln von Fasern um die in Schritt d) erzeugte Isolierung herum.
f) Bevorzugt Koextrudieren einer zweiten Schicht von Material der Isolierung um das Erzeugnis von Schritt e) so dass eine faserverstärke Isolierung entsteht.

Das Koextrudieren der Isolierung auf die aufgewickelten Kanal-Leiter und die gegebenenfalls vorkommenden weiteren Leiter gemäss Schritt d) geschieht bevorzugt mit einem Schlauchwerkzeug.

Die Nutzung eines Schlauchwerkzeugs hat den Vorteil, dass das Material der Isolierung nicht gegen und zwischen die aussenliegenden Leiter, also je nach Aufbau die Kanal-Leiter oder die weiteren Leiter, gepresst wird. So kann das Kühlfluid im Betrieb auch die aussenliegenden Leiter auf allen Seiten umgeben und kühlen.

Das Koextrudieren der zweiten Schicht von Material der Isolierung gemäss Schritt f) geschieht bevorzugt derart, dass sich die in Schritt d) erzeugte erste Schicht der Isolierung mit der in Schritt f) erzeugten zweiten Schicht verklebt und verbindet und die Fasern dabei möglichst vollständig und dicht vom Material der Isolierung umgeben werden. Für diese Koextrusionsschritt wird daher bevorzugt ein Druckwerkzeug genutzt.

Wird eine faserverstärkte Isolierung erzeugt, so wird bevorzugt in Schritt d) eine erste Schicht von Material der Isolierung aufgebracht, in Schritt e) die Faserverstärkung in einer Lage und in Schritt f) die zweite Schicht von Material der Isolierung, so dass die faserverstärkte Isolierung zwei Schichten von Material der Isolierung und der Lage der Fasern umfasst.

Das erfindungsgemässe Verfahren ist besonders einfach durchzuführen. Mit dem Verfahren lassen sich erfindungsgemässe Einzelleitungen komfortabel und vollautomatisch als Endlosprodukt herstellen. Es entfallen zeitintensive und fehleranfällige Schritte wie beispielsweise ein Verflechten von Leitern.

Das erfindungsgemässe Verfahren zur Herstellung eines Ladekabels umfasst die folgenden Schritte, die bevorzugt nacheinander in einer Fertigungslinie ausgeführt werden:
a) Zur Verfügung stellen von zwei erfindungsgemässen Einzelleitungen und gegebenenfalls weiteren Bestandteilen des Innenlebens des gewünschten Ladekabels als Endlosprodukte.
b) Verdrillen der Bestandteile des Innenlebens miteinander in eine erste Richtung.
c) Bevorzugt Umwickeln der verdrillten Bestandteile des Innenlebens mit Drähten, Bündeln oder Litzen in eine zweite Richtung, die sich von der ersten Richtung unterscheidet.
d) Koextrudieren eines Schutzmantels.

Das erfindungsgemässe Verfahren ist besonders einfach durchzuführen. Mit dem Verfahren lassen sich erfindungsgemässe Ladekabel komfortabel und vollautomatisch als Endlosprodukt herstellen.

Da der Schutzmantel des Ladekabels durchaus die Zwischenräume des Innenlebens des Ladekabels ausfüllen darf und zwecks Verbesserung der Stabilität des Kabels auch in vielen Ausführungsformen ausfüllen soll, wird die Koextrusion des Schutzmantels gemäss Schritt d) bevorzugt mit einem Druckwerkzeug durchgeführt.

Ein erfindungsgemässes Fahrzeug umfasst erfindungsgemässe Einzelleitungen, die bevorzugt eine elektrische Verbindung zwischen einem Antriebsenergiespeicher und einer Antriebseinheit herstellen und/ oder eine elektrische Verbindung zwischen einer Steckdose an der Aussenseite eines Fahrzeuges und einem Antriebsenergiespeicher.

Eine erfindungsgemässe Ladesäule umfasst erfindungsgemässe Einzelleitungen, die einen Stecker eines Ladekabels mit einer stationären Stromquelle verbinden.

In einer besonders bevorzugten Ausführungsform sind der Stecker und die Steckdose an der Aussenseite des Fahrzeugs derart ausgeführt, dass die Leiteranordnung der Einzelleitung, die Teil des Fahrzeuges ist, elektrisch mit der Leiteranordnung der Einzelleitung, die Teil der stationären Ladesäule ist, verbunden wird und Kühlfluid aus der Einzelleitung, die Teil des Fahrzeuges ist, in die Einzelleitung, die Teil der stationären Ladesäule ist, fliessen kann und umgekehrt. Die Steckdose umfasst dabei zwei Anschlussteile, die mit zwei Einzelleitungen des Fahrzeugs verbunden sind.

In einer Ausführungsform sind die Abgreifpunkte der zum Stecker und zur Steckdose gehörenden Anschlussteile jeweils hohlzylinderförmig ausgebildet und bilden jeweils den Fluidanschluss des jeweiligen Anschlussteils. Der Aussendurchmesser eines Abgreifpunktes des Steckers entspricht im Wesentlichen dem Innendurchmesser eines Abgreifpunktes des Steckdose oder umgekehrt, so dass jeweils ein Abgreifpunkt des Steckers und ein Abgreifpunkt der Steckdose zumindest über eine gewisse Distanz ineinander geschoben werden können und dabei eine elektrisch leitende Verbindung entsteht. Bevorzugt weist der Abgreifpunkt mit dem kleineren Aussendurchmesser an seinem der Einzelleitung zugewandten Ende einen Bereich mit einem grösseren Aussendurchmesser auf, der einen Anschlag bildet. An diesem Anschlag kann eine Kühlfluiddichtung vorgesehen sein.

In einer Ausführungsform des Ladesystems sind die Fluidanschlüsse der beidem Anschlussteile, die den Stecker bilden, derart miteinander verbunden, dass Fluid aus dem einen Fluidanschluss in den anderen fliessen kann. Je eines der zur Steckdose gehörenden Anschlussteile treten mit ihrem Abgreifpunkt in elektrischen Kontakt mit dem Abgreifpunkt eines der zum Stecker gehörenden Anschlussteile, wenn der Stecker in der Steckdose eingesetzt ist. Die Fluidanschlüsse der zur Steckdose gehörenden Anschlussteile stehen im eingesteckten Zustand mit Fluiddurchgangskanälen des Steckers in fluid-dichtem Kontakt, wobei die Fluiddurchgangskanäle zwei Schläuche des am Stecker montierten Ladekabels im Stecker fortsetzen und so die Kühlfluidversorgung der Einzelleitungen des Fahrzeugs während des Aufladens sicherstellen.

In einer bevorzugten Ausführungsform gibt es ein Set aus zwei Einzelleitungen und zwei Anschlussteilen, wobei die beiden Einzelleitungen mit Hilfe der beiden Anschlussteile lösbar und wiederverbindbar miteinander verbunden werden können. Dabei ist die eine Einzelleitung mit einer ersten Art eines Anschlussteils verbunden und die andere Einzelleitung mit einer zweiten Art eines Anschlussteils.

Als Kühlfluid kann Umgebungsluft, Wasser, Öl, insbesondere Transformatorenöl, oder Esterflüssigkeit eingesetzt werden. Wasser wird bevorzugt mit Zusätzen versehen, um einen Korrosionsschutz zu haben, den Gefrierpunkt zu senken oder die Wärmekapazität zu erhöhen.

Ein bevorzugtes Kühlfluid ist eine Mischung aus destilliertem Wasser mit Propylenglykol und besonders bevorzugt weiteren Zusätzen für Korrosionsschutz. In einer Ausführungsform ist zudem ein Zusatzstoff beigefügt, der die Leitfähigkeit der Mischung senkt. Diese Mischung hat eine hohe Wärmekapazität und eine geringe Viskosität.

Wasser hat den Vorteil, dass es eine hohe Wärmekapazität hat, ungiftig und leicht erhältlich ist. Durch Zusätze kann sein Gefrierpunkt gesenkt werden und andere seiner Eigenschaften beeinflusst werden. So kann das Wasser auch mit einem Korrosionsschutz versetzt werden oder durch Zusätze seine Wärmekapazität erhöht werden.

Transformatorenöl und Esterflüssigkeiten, wie gesättigte Pentaerythrittetrafettsäureester, sind aus der Anwendung bei Transformatoren bekannt, wo sie ebenfalls zur Kühlung von elektronischen Bauteilen eingesetzt werden.

Umgebungsluft hat den Vorteil, dass sie stets zur Verfügung steht und kein Speicher benötigt wird.

Neben dem Kühlfluid kann die Kühlleistung auch durch eine Durchflussmenge beeinflusst werden.

Ein Ladekabel gemäss einer bevorzugten Ausführungsform umfasst eine erste und eine zweite fluidkühlbare Einzelleitung sowie einen gemeinsamen Schutzmantel. Weiter umfasst das Ladekabel zwei Schläuche aus einem fluiddichten Material, die Kühlfluid leiten können und zwar in derselben Menge wie die beiden Einzelleitungen. Das Ladekabel dieser Ausführungsform umfasst ausserdem Signalleitungen, bevorzugt 12 Signalleitungen die in Form von vier Gruppen mit je drei Signalleitungen vorliegen. Weiter umfasst das Ladekabel einen Erdleiter. Der Erdleiter ist ein Leiter mit eigener Isolierung ausgebildet und innerhalb des gemeinsamen Schutzmantels angeordnet. Schliesslich umfasst das Ladekabel einen Beilauf aus Kunstfasern oder Hanffasern. Einzelleitungen, Schläuche, Signalleitungen, Erdleiter und Beilauf sind miteinander in einer ersten Richtung verdrillt und bilden das Innenleben des Ladekabels dieser Ausführungsform. Nebeneinander angeordnete Einzeldrähte oder dünne Litzen sind in einer zweiten Richtung, die sich von der ersten Richtung unterscheidet, um dieses Innenleben gewickelt und vom Schutzmantel umgeben. Mehrere Gruppen der nebeneinander angeordneten Einzeldrähte oder dünnen Litzen sind durch Abschnitte von Schutzmantelmaterial voneinander getrennt, die keinerlei Leiter enthalten.

In einer bevorzugten Ausführungsform umfasst das Ladekabel zwei fluidkühlbare Einzelleitungen deren Stützstruktur eine Chrom-Stahl Helix ist. Die Kanal-Leiter sind Bündel von unbeschichteten Kupferdrähten und es gibt keine weiteren Leiter. Jede der Einzelleitungen ist von einer faserverstärkten Isolierung umgeben. Dieses Ladekabel umfasst ausserdem zwei Schläuche, einen ersten Erdleiter mit rundem Querschnitt, der von einer eigenen Isolierung umgeben ist und vier Gruppen von Signalkabeln, die jeweils drei Signalkabel umfassen, welche von einem gemeinsamen Signalkabel-Mantel umgeben sind. Die beiden Einzelleitungen, der erste Erdleiter, die zwei Schläuche und die vier Gruppen von Signalkabeln befinden sich innerhalb eines gemeinsamen Schutzmantels. Der Schutzmantel umfasst vier Gruppen von nebeneinander angeordneten Leitern, die durch Abschnitte aus Mantelmaterial ohne eingebettete Leiter voneinander getrennt sind. Die Leiter im Schutzmantel wirken ebenfalls als Erdleiter. Diese bevorzugte Ausführungsform eines Ladekabels stellt einen besonders guten Kompromiss dar in Hinblick auf Überfahrfestigkeit, Flexibilität, Gewicht und Sicherheit.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: Eine runde Einzelleitung mit einer Helix als Stützstruktur, die mit Kanal-Leitern umwickelt ist.
- Fig.1b: Eine runde Einzelleitung mit einem offenen Profil als Stützstruktur, die mit Kanal-Leitern in der Form von Bündeln umwickelt ist.
- Fig. 1c: Eine runde Einzelleitung mit einer Helix als Stützstruktur und einer zweiten Lage weiterer Leiter auf den Kanal-Leitern
- Fig. 2a: Ein offenes Profil
- Fig.2b: Ein verdrilltes offenes Profil
- Fig.2c: Eine Helix mit veränderlicher Ganghöhe
- Fig. 3a: Helix als Stützstruktur umwickelt mit Kanal-Leitern, wobei die Stützstruktur und die Kanal-Leiter sich in der Gängigkeit unterscheiden
- Fig. 3b: Helix als Stützstruktur umwickelt mit Kanal-Leitern, wobei die Stützstruktur und die Kanal-Leiter sich in der Gängigkeit gleichen
- Fig.4a: Ein Ladekabel mit zwei Einzelleitungen
- Fig. 4b: Eine erste Ausführungsform eines Ladekabels mit zwei Einzelleitungen, Erdleiter, Schläuchen und Signalkabeln
- Fig. 4c: Eine zweite Ausführungsform eines Ladekabels mit zwei Einzelleitungen, Erdleiter, Schläuchen und Signalkabeln
- Fig. 4d: Ein Ladekabel mit zwei Einzelleitungen, Schläuchen, Beilauf, Signalkabeln und einem Erdleitergeflecht
- Fig. 5: Ein Ladesystem
- Fig.6: Ein Stecker mit Steckerkühlung
- Fig.7: Ein Fahrzeug mit zwei Einzelleitungen.

Grundsätzlich sind in den Figuren gleiche Teile mit gleichen Bezugszeichen versehen.

### Wege zur Ausführung der Erfindung

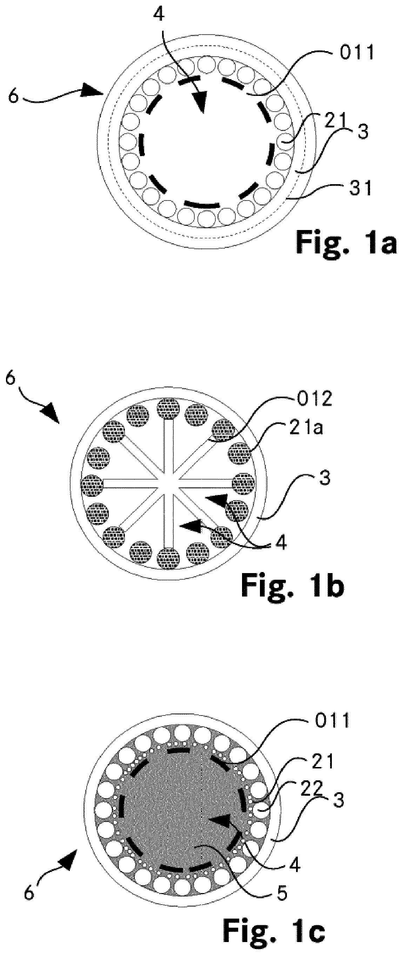

Figur 1a zeigt einen Querschnitt durch eine runde Einzelleitung 6 mit einer Helix 011 als Stützstruktur und Kanal-Leitern 21, die Schraubenlinien mit runder Grundfläche folgen, und welche die Helix 011 umwickeln und berühren. Die Kanal-Leiter 21 leiten den Strom, der durch die Einzelleitung 6 fliesst. Die Kanal-Leiter 21 sind unmittelbar von einer Isolierung 3 umhüllt. Die Isolierung ist faserverstärkt. Sie besteht aus einer inneren Lage Isolierungsmaterial und einer äusseren Lage Isolierungsmaterial und einer Zwischenlage in der sich ein von Isolierungsmaterial umgebenes Fasergewebe als Faserverstärkung 31 befindet. Im Inneren der Helix 011 befindet sich das freie Volumen des Kanals 4, der durch die Helix 011 und die Kanal-Leiter 21 gebildet wird. Dieser Kanals 4 ist allerdings nicht kühlfluiddicht, so dass sich das Kühlfluid 5 in radialer Richtung bis zur Isolierung 3 hin ausbreiten kann.

Figur 1b zeigt einen Querschnitt durch eine runde Einzelleitung 6 mit einem offenen Profil 012 als Stützstruktur und Kanal-Leiter 21a, die Drahtbündel ausgebildet sind. Die Kanal-Leiter 21a leiten den Strom, der durch die Einzelleitung 6 fliesst. Die Kanal-Leiter 21a folgen Schraubenlinien mit runder Grundfläche. Die Schraubenlinien, denen die Kanal-Leiter 21a folgen, haben alle denselben Radius, dieselbe Gängigkeit und dieselbe Ganghöhe. Die Kanal-Leiter 21a werden unmittelbar von einer Isolierung 3 umhüllt. Die Stützstruktur hat im Querschnitt die Form eines Sterns mit einer runden Verbindungsfläche und sechs, gleichmässig um die Verbindungsfläche herum angeordneten Rippen. Es handelt sich also um einen Stern-Querschnitt erster Art. Es gibt insgesamt sechs gleich grosse Kanäle 4, die durch das offene Profil 012 und die Kanal-Leiter 21a gebildet werden, wobei auch in diesem Fall die Struktur der Kanal-Leiter 21a und somit der Kanal 4 für das Kühlfluid 5 durchlässig sein soll. Das Kühlfluid 5 kann sich somit bis zur Isolierung 3 hin ausbreiten.

Figur 1c zeigt die Verteilung des Kühlfluids 5 in einer weiteren Einzelleitung. Es ist ein Querschnitt durch eine runde Einzelleitung 6 mit einer Helix 011 als Stützstruktur und Kanal-Leitern 21, die Schraubenlinien mit runder Grundfläche folgen, und welche die Helix 011 umwickeln und berühren gezeigt. Die Kanal-Leiter 21 sind von weiteren Leiter 22 umgeben. Die weiteren Leiter 22 stehen mit den Kanal-Leiter 21 in elektrischen Kontakt, berühren die Stützstruktur aber nicht selbst. Die Durchmesser der Kanal-Leiter 21 sind hier deutlich kleiner als die Durchmesser der weiteren Leiter 22. Die Kanal-Leiter 21 und die weiteren Leiter 22 leiten gemeinsam den Strom, der durch die Einzelleitung 6 fliesst. Die weiteren Leiter 22 sind unmittelbar von einer Isolierung 3 umhüllt. Im Inneren der Helix 011 befindet sich das freie Volumen des Kanals 4, der durch die Helix 011 und die Kanal-Leiter 21 gebildet wird. Dieser Kanals 4 ist allerdings nicht kühlfluiddicht, so dass sich das Kühlfluid 5 in radialer Richtung um die weiteren Leiter 22 herum und bis zur Isolierung 3 hin ausbreiten kann.

Das Kühlfluid 5 ist in grau dargestellt. Die Isolierung 3 ist fluiddicht. Die Leiter 21, 22 selbst sind in der Regel fluidundurchlässig, aber in den Freiräumen zwischen ihnen verteilt sich das Fluid. Schliesslich erreicht es die gezeigte Verteilung, bei der im Wesentlichen alle Leiter 21, 22 über einen Grossteil ihrer Oberfläche mit den Fluid in Kontakt sind.

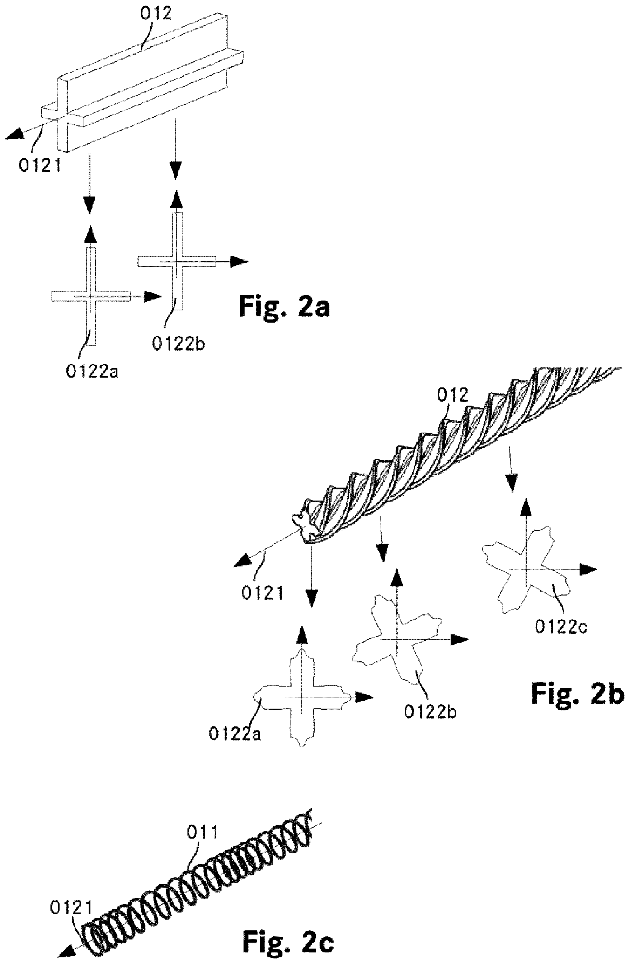

Figur 2a zeigt ein offenes Profil 012 mit einem Stern-Querschnitt zweiter Art mit einer runden Verbindungsfläche und vier Rippen, die in gleichmässigen Winkelabständen verteilt sind, aber unterschiedliche Längen haben. Das offene Profil 012 hat eine Längsachse 0121. Querschnitte entlang dieser Längsachse 0122a, b, c sind immer gleich und haben die Form eines aufrechtstehenden Kreuzes, wobei die horizontale Ausdehnung stets kleiner ist als die vertikale.

Figur 2b zeigt ein offenes Profil 012 mit einem Stern-Querschnitt erster Art mit einer runden Verbindungsfläche und vier Rippen, die in gleichmässigen Winkelabständen verteilt sind und gleiche Längen haben. Das offene Profil 012 hat eine Längsachse 0121. Querschnitte entlang dieser Längsachse 0122a, b, c sind zwar von der Form her immer gleich, sind aber gegeneinander verdreht. Die Form der Querschnitte ist ein Kreuz mit in etwa dreieckigen Rippen, wobei die Höhe der Dreiecke gleich ist. Es handelt sich hier um ein Beispiel eines verdrillten offenen Profils.

Figur 2c zeigt eine Helix 011 mit Abschnitten unterschiedlicher Ganghöhe 0111. Diese Helix 011 ist aus rundem Draht gefertigt. Auch die Helix 011 hat eine Längsachse 0121.

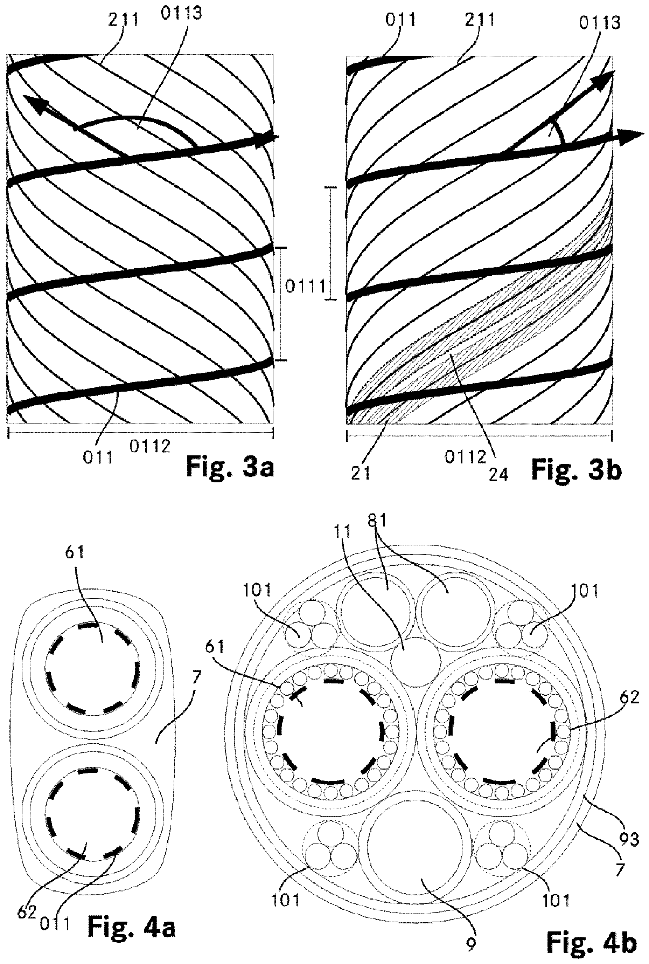

Figur 3a zeigt eine Helix 011 mit konstanter Ganghöhe 0111 in der Seitenansicht. Die Ganghöhe 0111 lässt sich in diese Ansicht einfach erkennen, indem beispielsweise der Abstand zwischen zwei Punkten, bei denen die Helix 011 im Blickfeld auftaucht, betrachtet wird. Hier ist die Ganghöhe 0111 eine Längeneinheit. Auch ist der Durchmesser 0112 des durch die Helix 011 definierten Zylinders in dieser Ansicht gleich der Breite des Rechtecks, als das der Zylinder in dieser Ansicht erscheint. Hier ist der Radius der Grundfläche des Zylinders gleich 1.15 Längeneinheiten.

Die konvexe Hülle der Helix 011 ist der Zylinder, der in der Seitenansicht gezeigt ist. Die Berührungspunkte der Stützstruktur, also der Helix 011, mit diesem Kreiszylinder, also ihrer konvexen Hülle, sind gerade die am weitesten von der Längsachse 0121 der Helix 011 entfernten Punkte der Helix 011. Die Stützstrukturlinien gleichen daher im vorliegenden Fall, da die Ausdehnung des die Helix 011 definierenden Drahtes nicht dargestellt ist, gerade die Linien mit denen die Helix 011 in Figur 3a eingezeichnet ist.

Die Schraubenlinien 211 der Kanal-Leiter haben jeweils eine Ganghöhe von etwa 4.5 Längeneinheiten und sind linksgängig. Der Steigungswinkel ist arctan(Ganghöhe/(π Durchmesser))=arctan(4.5/(2 1.15 π))= 32°.

Die Helix 011 der Stützstruktur ist rechtsgängig und hat eine Ganghöhe 0111 von 1 und damit einen Steigungswinkel von arctan(1/(2.3^{∗}π))=8°.

Im gezeigten Beispiel kreuzen die Schraubenlinien 211 der Kanal-Leiter die Stützstrukturlinien also in einem Winkel 0113 von (180°-32°)-8°=140°.

Das Ganghöhenverhältnis beträgt 4.5.

Figur 3a zeigt den Verlauf einer Stützstruktur in Form einer Helix 011 und die Schraubenlinien 211 mit runder Grundfläche denen die Kanal-Leiter in einer Ausführungsform folgen. Die Gängigkeit Helix 011 und der Schraubenlinien 211 unterscheidet sich. Während die Schraubenlinien 211 alle dieselbe Ganghöhe, dieselbe Gängigkeit und denselben Radius haben, hat die Helix 011 der Stützstruktur zwar den im Wesentlichen gleichen Radius aber eine deutlich geringere Ganghöhe. Im gezeigten Beispiel liegt ein Kanal-leiter 21 der einer der gezeigten Schraubenlinien 211 folgt, während einer Umdrehung um die Längsachse der Stützstruktur, insgesamt sechs Mal auf der Helix 011 der Stützstruktur auf.

Figur 3b zeigt eine sehr ähnliche Ausführungsform wie Figur 3a. Allerdings ist nun die Gängikeit von Helix 011 der Stützstruktur und den Schraubenlinien 211 der Kanal-Leiter gleich. Während die Schraubenlinien 211 alle dieselbe Ganghöhe, dieselbe Gängigkeit und denselben Radius haben, hat die Helix 011 der Stützstruktur zwar den im Wesentlichen gleichen Radius aber eine deutlich geringere Ganghöhe. Im gezeigten Beispiel liegt ein Kanal-leiter 21 der einer der gezeigten Schraubenlinien 211 folgt, während einer Umdrehung um die Längsachse der Stützstruktur, nur insgesamt vier Mal auf der Helix 011 der Stützstruktur auf.

Im gezeigten Beispiel kreuzen die Schraubenlinien 211 der Kanal-Leiter die Stützstrukturlinien 011, wegen der gleichen Gängigkeit, nun in einem Winkel 0113 von 32°-8°=24°.

Das Ganghöhenverhältnis beträgt auch hier 4.5.

In Figur 3b sind zusätzlich zu den Schraubenlinien 211 der Kanal-Leiter auch zwei Kanal-Leiter 21 in Form von Litzen eingezeichnet. Damit das Kühlfluid aus dem Kanal ausdringen kann, befindet sich ein kleiner Abstand 24 zwischen den Kanal-Leitern 21. Obwohl es in Figur 3b vielleicht anders wirkt, liegen die Kanal-Leiter 21 aussen auf der Stützstruktur auf und umwickeln sie.

Figur 4a zeigt ein Ladekabel 12 mit zwei Einzelleitungen 61 und 62. Die erste und die zweite Einzelleitung 61 und 62 besitzen eine Helix 011 als Stützstruktur und haben beide einen runden Querschnitt und den gleichen Durchmesser. Die Einzelleitungen 61 und 62 sind nur schematisch dargestellt. Ob es hier nur das Kanal-leiter 21 gibt oder auch weitere Leiter 22, ist hier offen gelassen. Alle Varianten sind möglich und die erste Einzelleitung 61 kann anders aufgebaut sein als die zweite Einzelleitung 62. Auch könnten sich die Einzelleitungen 61 und 62 in ihrem Durchmesser und/oder ihrer Form unterscheiden. Die beiden Einzelleitungen 61 und 62 liegen nebeneinander und innerhalb eines gemeinsamen Schutzmantels 7. Der Schutzmantel 7 hat hier den Querschnitt eines Rechtecks mit abgerundeten Ecken und etwas ausgebuchteten Seiten. Der Schutzmantel 7 füllt in diesem Fall den gesamten Raum zwischen seiner Oberfläche und den Einzelleitungen 61 und 62 aus.

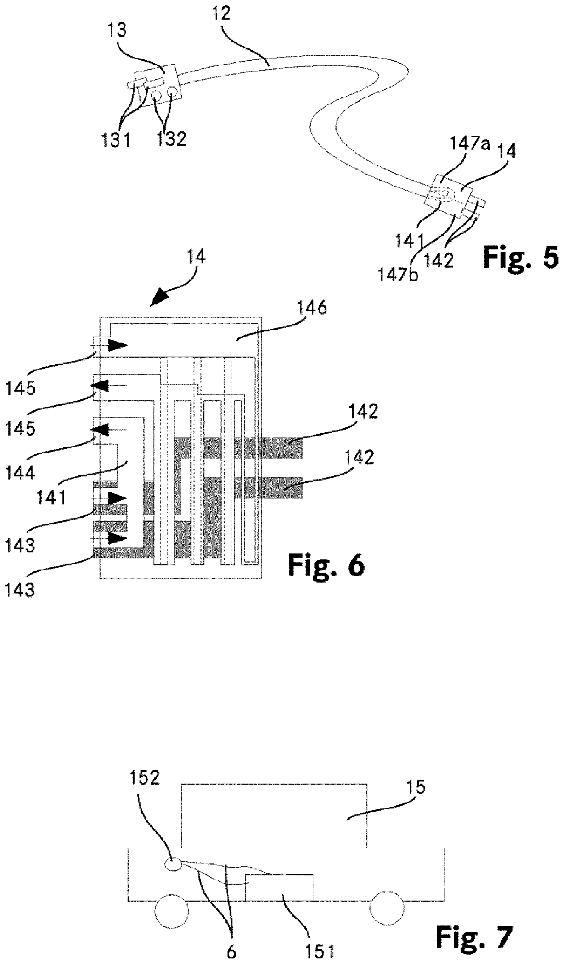

Figur 6b zeigt ein weiteres Ladekabel 12. Dieses umfasst zwei Einzelleitungen 61, 62. Die beiden Einzelleitungen 61 und 62 haben den gleichen Durchmesser und sind nebeneinander angeordnet und legen so den Innendurchmesser des Schutzmantels 7 fest, der die Einzelleitungen 61, 62 umgeben. Die gezeigte Einzelleitungen 61 und 62 entsprechen der Einzelleitung gemäss Figur 1a. Innerhalb des Schutzmantels 7, also im Bereich zwischen seinem Innen- und seinem Aussenradius, befindet sich ein ausgedehnter Erdleiter 93 in Form einer Vielzahl parallel verlaufender und das Kabelinnere umwindender Kupferdrähte. Dieser ausgedehnte Erdleiter 93 kann auch durch ein Leitergeflecht realisiert sein. Der ausgedehnte Erdleiter 93 kann sowohl als Neutralleiter dienen als auch als Schirm oder als Sensor für Defekte oder überhöhte Temperaturen im Schutzmantel 7. Im Inneren des Schutzmantels 7 befindet ausserdem ein Erdleiter 9 der aus verdrillten Kupferdrähten besteht und mit einer eigenen Isolation versehen vollständig innerhalb des Innenradius des Schutzmantels 7 liegt. Ausserdem gibt es im Inneren des Schutzmantels 7 zwei Schläuche 81 sowie einen Beilauf 11 aus Kunstfasern, sowie vier Gruppen mit jeweils drei Signalkabeln101.

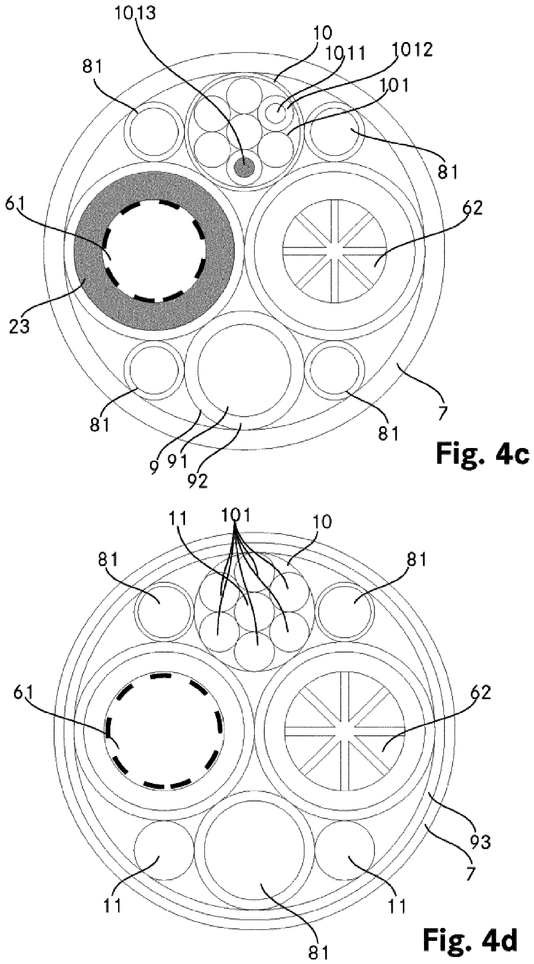

Figur 4c zeigt ein weiteres Ladekabel 12. Dieses umfasst eine erste und eine zweite Einzelleitung 61, 62, einen Erdleiter 9, sieben Signalkabel 101 in einer gemeinsamen Hülle 10 und vier Schläuche 81. All dies ist von einem gemeinsamen Schutzmantel 7 umgeben. Der Schutzmantel 7 hat die Form eines runden Hohlzylinders mit einem Innendurchmesser, der dem Doppelten eines Einzelleitungs-Durchmessers entspricht. Die erste und zweite Einzelleitung 61, 62 haben beide einen runden Querschnitt und den gleichen Durchmesser. In der Stützstruktur unterscheiden sie sich: die erste Einzelleitung 61 nutzt eine Helix 011, während die zweite Einzelleitung 62 ein offenes Profil 012 nutzt.

Der Erdleiter 9 hat ebenfalls einen runden Querschnitt. Er besteht aus Neutralleiterdrähten 91 und einer Neutralleiterisolation 92. Der Durchmesser des Erdleiters 9 ist 2/3 des Durchmessers der ersten Einzelleitung 61.

Die Hülle 10 der umhüllten Signalkabel 101 hat ebenfalls einen Durchmesser von etwa 2/3 der ersten Einzelleitung 61. Im Querschnitt ist die Hülle 10 der umhüllten Signalkabel 101 kreisförmig. Jedes einzelne der Signalkabel 101 hat ebenfalls einen runden Querschnitt. Die Hülle 10 ist dünn. Zwei der abgebildeten Signalkabel 101 besteht aus einem Signalleiter 1011 der unmittelbar von einer Schutzschicht 1012 umgeben ist. Der Signalleiter 1011 hat einen Signalleiterquerschnitt 1013.

Der Leiterquerschnitt 23 der ersten Einzelleitung 61 ist ebenfalls eingezeichnet. Er umfasst sowohl den Leiterquerschnitt der Kanal-Leiter 21 der Einzelleitung 61 als auch den Leiterquerschnitt möglicher weiterer, mit den Kanal-Leitern 21 in elektrischen Kontakt stehenden Leitern 22.

Der Leiterquerschnitt 23 der ersten Einzelleitung 61 ist mehr als 20-mal so gross wie der Signalleiterquerschnitt 1013.

Jeder der vier Schläuche 81 hat einen runden Querschnitt und einen Aussendurchmesser von etwa 1/3 des Durchmessers der ersten Einzelleitung 61.

Die erste und die zweite Einzelleitung 61, 62 sind nebeneinander angeordnet und berühren sich. Oberhalb des Berührungspunktes und in Kontakt mit beiden Einzelleitungen 61, 62 ist die Hülle 10 mit den von ihr umhüllten Signalkabeln 101 angeordnet. Unterhalb des Berührungspunktes und in Kontakt mit beiden Einzelleitungen 61, 62 ist der Erdleiter 9 angeordnet. Die zwei Schläuche 81, die das Kühlfluid 5 der Einzelleitungen 61, 62 zurückführen, sind jeweils so angeordnet, dass sie in Kontakt mit einer der Einzelleitungen 61 oder 62 und dem Erdleiter 9 sind. Die beiden Schläuche 81, die die Steckerkühlung 146 versorgen, sind jeweils so angeordnet, dass sie in Kontakt mit einer der Einzelleitungen 61 oder 62 und der Hülle 10 sind. So ergibt sich eine enge Packung aller Bestandteile des Ladekabels 12 und der beiden Einzelleitungen 61, 62. Zudem gibt es bei dieser Anordnung gleich acht Punkte die auf dem Umkreis der Anordnung liegen. Die Innenseite des Schutzmantels 7 entspricht genau dem Umkreis der Anordnung. Vier der acht Punkte liegen genau 90° voneinander entfernt und werden durch massive Leiter, die Einzelleitungen 61, 62, den Erdleiter 9 und die Signalkabel 101 in ihrer Hülle 10, gebildet. Die potentiell komprimierbaren Schläuche 81 liegen zwischen diesen kaum komprimierbaren Strukturen. Bei starkem Druck können die Schläuche 81 wohl etwas deformiert werden, durch die kaum komprimierbaren Strukturen auf beiden Seiten sind sie aber vor einem kompletten Verschluss geschützt.

In einer bevorzugten Ausführungsform ist die Stützstruktur beider Einzelleitungen 61, 62 eine Helix 011 aus Draht aus Chrom-Nickel-Stahl mit einem Drahtdurchmesser von 0.6 mm. Diese ist umgeben von 14 Kanal-Leitern 21 aus unbeschichteten Kupferdrähten mit je 2.5mm² Querschnittsfläche, so dass sich ein Leiterquerschnitt 23 der Einzelleitung 61 von 35 mm² ergibt. Eine Isolierung, bevorzugt aus TPE oder EPDM, umgibt die Kanal-Leiter 21 und vervollständigt die Einzelleitung 61. Die Isolierung ist durch ein Aramid- oder Hanf-fasergeflecht verstärkt. Die Einzelleitung 62 ist gleich aufgebaut. Im Ladekabel 12 gibt es neben zwei derartigen Einzelleitungen 61, 62 sechs Signalkabel 101 mit einem Leiterquerschnitt 1013 von je 0.75 mm², die um einen Beilauf 11 angeordnet sind und mit einer gemeinsamen Hülle 10 zusammengehalten werden. Das Kabel umfasst ausserdem zwei Schläuche 81 mit je 4 mm Innendurchmesser, einen Erdleiter 9 mit 16 mm² Leiterquerschnitt und zwei Stränge Beilauf 11. Die Anordnung erfolgt bevorzugt so wie in Figur 4c beschrieben, wobei allerdings die Schläuche 81 zur Versorgung der Steckerkühlung 146 durch Beilauf 11 ersetzt wurden.

Figur 4d zeigt ein weiteres Ladekabel 12. Es beinhaltet eine erste und eine zweite Einzelleitung 61, 62, drei Schläuche 81, drei Stränge Beilauf 11, sechs Signalkabel 101, einen ausgedehnten Erdleiter 93 in Form eines Geflechts und einen Schutzmantel 7. Die sechs Signalkabel 101 sind um einen Strang Beilauf 11 angeordnet und mit einer Hülle 10 zusammengefasst.

Die Signalkabel 101, die Stränge des Beilaufs 11, die Schläuche 81 und die Einzelleitungen 61, 62 haben alle einen runden Querschnitt. Der Schutzmantel 7 hat die Form eines hohlen Kreiszylinders. Auf seiner Innenseite liegt der ausgedehnte Erdleiter 93 an, welches ebenfalls die Form eines runden Hohlzylinders hat. Im Inneren dieses vom ausgedehnten Erdleiter 93 gebildeten Hohlzylinders befinden sich die beiden Einzelleitungen 61, 62 und alle anderen Bestandteile des Ladekabels. Der Innenradius des Geflechts des ausgedehnten Erdleiters 93 ist gleich dem Durchmesser einer Einzelleitung 61. Der Durchmesser der beiden Einzelleitungen 61, 62 ist gleich gross. Das Geflecht des ausgedehnten Erdleiters 93 ist derart gestaltet, dass es eine geringe Vergrösserung seines Innenradius zulässt. Die Hülle 10 und einer der Schläuche 81 haben einen Durchmesser von in etwa 2/3 des Durchmessers der ersten Einzelleitung 61. Die zwei übrigen Schläuche 81 und die beiden Stränge Beilauf 11, die sich ausserhalb der Hülle 10 befinden, haben bevorzugt einen Durchmesser von in etwa 1/3 des Durchmessers der ersten Einzelleitung 61.

In einer bevorzugten Ausführungsform hat eine Einzelleitung 6 eine Helix 011 mit einem Durchmesser von 7.4 mm, bestehend aus Chrom-Nickel-Stahl Draht mit einem Durchmesser von 0.6 mm als Stützstruktur. Diese ist umgeben von mehreren Lagen Kupferdraht, wobei die der Stützstruktur nächste Lage der Kupferdrähte die Kanal-leiter darstellen. Die Anzahl Drähte und der Durchmesser der Drähte derart gewählt werden, dass der Leiterquerschnitt 23 der Einzelleitung 6 35 mm² beträgt. Diese Kanal-Leiter 21 und die weiteren Leiter 22 sind von einer Isolierung, bevorzugt aus EPDM oder TPE, mit der Dicke von 2 mm umgeben, so dass die Einzelleitung 6 einen Durchmesser von 12 mm aufweist.

In einer bevorzugten Ausführungsform eines Ladekabels 12 umfasst es zwei dieser Einzelleitungen 61, 62, zwei Schläuche 81 aus Polyurethan (PUR) mit einem Aussendurchmesser von 4.0 mm und einen Schlauch 81 mit einem Aussendurchmesser von 8.0 mm, wobei die Wandstärke des grossen Schlauchs 811 mm und bei den kleinen Schläuchen 81 0.5 mm beträgt. Der Schlauch 81 mit 8.0 mm Aussendurchmesser nimmt das Kühlfluid 5 auf, welches durch die Kanäle 4 beider Einzelleitungen 61, 62 geflossen ist und diese gekühlt hat. Die Schläuche 81 mit einem Aussendurchmesser von 4.0 mm dienen als Hin- und Rückleitung für eine Steckerkühlung 146. Ausserdem umfasst das Ladekabel 12 sechs Signalkabel 101 mit jeweils einem Leiterquerschnitt 1013 von 0.75 mm² und einem Leiterdurchmesser von 1 mm. Dieser ist umgeben von einer Isolierung 3 mit einer Wandstärke von 0.5 mm. Diese sechs Signalkabel 101 sind um einen Beilauf 11, bevorzugt aus PP oder PE, mit einem Durchmesser von 2 mm angeordnet. Um die sechs Signalkabel 101 herum ist eine Hülle 10 mit 0.5 mm Dicke angeordnet. Die ganze Anordnung ist mit einem Geflecht aus Kupferdrähten mit 0.25 mm Durchmesser umgeben, wobei das Geflecht einen Zylinder mit einem Innendurchmesser von 24 mm bildet. Ein Schutzmantel 7 mit einer Wandstärke von 2.75 mm umgibt alles, so dass das Ladekabel 12 insgesamt einen Durchmesser von 30 mm aufweist. Dieses Ladekabel 12 lässt sich einfach greifen. Es beinhaltet ein Volumen von 90.5 mm³ Kupfer pro mm Länge und ein Volumen von 67.5 mm³ Wasser pro mm Länge, wenn das Ladekabel 12 mit Wasser als Kühlfluid 5 betrieben wird. Damit ergibt sich ein Gewicht von etwas weniger als 1 g/mm Länge des Ladekabels oder 1 kg/m Kabellänge. Mit einer Kühlung mit 20°C warmen Wasser und einer Durchflussrate von 1.8 l/min kann mit diesem Ladekabel 12 ein Strom von 700 A über 7m Länge übertragen werden ohne, dass die Oberfläche bei einer Umgebungstemperatur von 20°C heisser als 50°C wird. Unter denselben Bedingungen können fast 600 A übertragen werden, ohne dass das Ladekabel 12 irgendwo an seiner Oberfläche heisser als 40°C wird.

Figur 5 zeigt ein Ladesystem mit einem Ladekabel 12, einem Stecker 14 und einem Endanschluss 13. Der Endanschluss 13 umfasst elektrische Kontakte 131 und eine Fluidzuführung 132 für das Kühlfluid 5. Der Endanschluss 13 umfasst zwei Anschlussteile, die aber in der vorliegenden Figur nicht erkennbar sind. Die Fluidzuführung132 ist derart gestaltet, dass eine Pumpe oder ein Leitungssystem, welches das Kühlfluid 5 mit einem gewünschten Druckunterschied zwischen Zufluss und Abfluss der Fluidzuführung132 zur Verfügung stellt. Die Fluidzuführung 132 umfasst die Fluidanschlüsse der beiden Anschlussteile, die der Endanschluss 13 umfasst. Die elektrischen Kontakte 131 sind derart gestaltet, dass sie mit einer Stromquelle, die die zu übertragende Leistung zur Verfügung stellt, verbunden werden können. Die elektrischen Kontakte 131 sind die Abgreifpunkte der Anschlussteile, die der Endanschluss 13 umfasst.

Der Stecker 14 umfasst zwei Anschlussteile 147a, b, deren gemeinsame Grenze in der vorliegenden Figur durch eine gestrichelte Linie angedeutet ist.

Der Stecker 14 umfasst in seinem Inneren eine Fluidrückführung 141, die Kühlfluid 5 aus einer der Einzelleitungen 61, 62 aufnimmt und in die andere Einzelleitung leitet oder die Kühlfluid 5 aus beiden Einzelleitungen 61, 62 aufnimmt und dieses in einen oder zwei Schläuche 81 des Ladekabels leitet. Die Fluidrückführung 141 wird durch die Gestaltung der Fluidanschlüsse der beiden Anschlussteile die der Stecker umfasst realisiert. Ausserdem umfasst der Stecker 14 elektrische Kontakte 142, mit denen eine elektrische Verbindung zum zu ladenden Energiespeicher hergestellt werden kann. Bei den elektrischen Kontakten 142 handelt es sich um die Abgreifpunkte der beiden Anschlussteile die der Stecker 14 umfasst. Der Stecker 14 kann ausserdem weitere Kontakte umfassen, die mit Signalkabeln 101 verbunden sind und über die ein Datenaustausch zwischen den am Ladekabel 12 angeschlossenen Apparaten stattfinden kann.

Figur 6 zeigt einen Schnitt durch einen Stecker 14 mit einer Steckerkühlung 146. Der Stecker 14 umfasst drei Anschlüsse für Schläuche 81 des Kabels 145, 144 und zwei Anschlüsse für Einzelleitungen 143. Die zwei Anschlüsse für Einzelleitungen 143 sind als Rohre aus gut leitendem Material geformt. Die Kanal-Leiter 21 und die gegebenenfalls weitern Leiter 22 werden mit dem Rohr in Kontakt gebracht, beispielsweise indem sie über die Aussenseite des Rohres gelegt werden und dort festgeklemmt und/oder verlötet werden. Durch dieses Festklemmen und/oder Verlöten wird das Kühlfluid 5 daran gehindert, auf die Aussenseite des Rohres zu gelangen. Das Rohr hat bevorzugt einen Innendurchmesser, der in etwa gleichgross oder etwas grösser ist als der oder die Kanäle 4 der anzuschliessenden Einzelleitung 6. Das Rohrinnere ist bevorzugt aus einem elektrisch isolierenden Material gefertigt. Das Fluid tritt ins Innere des Rohres ein. Kurz hinter dem Anschluss, im Inneren des Steckers 14 teilt sich das Rohr: Das gut leitende Material der Rohrwand wird zusammengefasst und geht in die gewünschte Form des elektrischen Kontakts 142 am Steckerausgang, dem Abgreifpunkt, über. Das isolierende Material im Rohrinneren formt ein Rohr, welches mit dem Rohr des Anschlusses für die zweite Einzelleitung 143 zusammenkommt und schliesslich zum Anschluss für einen Schlauch 144 führt. Dies ist die Fluidrückführung 141 des Steckers 14. Der Anschluss für einen Schlauch 144 kann aus einem sich in Richtung Stecker hin konisch erweiternden Rohr bestehen. Der Schlauch 81 kann über dieses Rohr gezogen werden und dann festgeklemmt werden. Auf dieselbe Art können die beiden anderen Anschlüsse für Schläuche 145 gestaltet sein. Diese stellen den Hin- und Rückfluss für die Steckerkühlung 146 dar. Dieses besteht aus einer oder mehreren Kühlleitungen, die an denjenigen Stellen des Steckers 14 vorbei führen, die spezielle gekühlt werden sollen.

Es wurde der Übersichtlichkeit halber darauf verzichtet, die beiden Anschlussteile 147a, b in dieser Figur speziell zu kennzeichnen einzuzeichnen: Die Kontakte 142 stellen die Abgreifpunkte der Anschlussteile 147a,b dar. Der Fluidanschluss des einen Anschlussteils geht führt in den Fluidanschluss des anderen Anschlussteils. Der Fluidanschluss des anderen Anschlussteils umfasst die Fluidrückführung 141 und den Anschluss für einen Schlauch 144.

Figur 7 zeigt ein Fahrzeug 15 mit zwei Einzelleitungen 16, die eine Verbindung zwischen einer Steckdose 152 und einem Antriebsenergiespeicher 151 herstellen.

Zusammenfassend ist festzustellen, dass die Leiterquerschnitte von den Einzelleitungen 6, dem Erdleiter 9 und den Signalkabeln 101 den jeweiligen Anforderungen entsprechend gewählt werden können. Ebenso kann die Anordnung der Bestandteile des Ladekabels an die Anforderungen angepasst gewählt werden. So können beispielsweise Sensoren in das Ladekabel 12 integriert werden und die Anzahl der Signalkabel 101 kann höher oder niedriger gewählt werden. Insbesondere Stränge von Beilauf 11 können durch Signalkabel 101, Sensoren, weitere Schläuche 81, weitere Leiter zur Übertragung von elektrischer Leistung oder unstrukturiertes Füllmaterial ersetzt werden. Der Schutzmantel 7 kann verstärkt werden, zum Beispiel mit elektrisch isolierten Ringen oder eine Drahthelix um die Überrollfestigkeit nochmal zu verbessern. Auch kann um den Schutzmantel 7 herum eine weitere Verstärkung angebracht werden. Anstelle von verzinntem Kupfer kann, überall oder nur in Teilen der Einzelleitungen 6 und/oder des Ladekabels, blankes Kupfer, Kupferlegierungen, Aluminium oder andere Leitermaterialien eingesetzt werden. Ebenso können die Schläuche 81 aus EPDM, Nylon, Polyamide oder Silikon sein. Die Schläuche können faserverstärkt sein. Die Wandstärken von Isolierungen und Schläuchen 81 können gemäss den jeweiligen Anforderungen gewählt werden. Das Material des Schutzmantels 7 und das Material der Isolierung 3 der Einzelleitungen 61, 62 können identisch sein. Auf die Hülle 10 der Signalkabel 101 kann verzichtet werden. Die Kanal-Leiter 21 können als Einzeldrähte, als Bündel oder Litzen von Drähten gestaltet sein. Drähte und Gruppen von Drähten können durch Bänder oder Litzen aus mehreren Drähten ersetzt werden. Der Schutzmantel 7 muss nicht rund sein, sondern kann sich auch der Form der Kabelbestandteile oder an äussere Gegebenheiten anpassen.

## Patentansprüche

1. Ladekabel (12) für hohe Ladeströme von 200 A und mehr, vorzugsweise 700 A, zumindest zu einem Laden eines Energiespeichers (151) eines Fahrzeugs (15), umfassend eine erste und eine zweite Einzelleitung (61, 62) und einen gemeinsamen Schutzmantel (7), wobei jede der Einzelleitungen (61, 61)
a) eine offene Stützstruktur (011,012) mit einer Längsausdehnung,
b) mindestens einen Kanal-Leiter (2), aus elektrisch leitendem Material, und
c) eine Isolierung (3) aufweist,
wobei
d) der mindestens eine Kanal-Leiter (2) die offene Stützstruktur (011,012) entlang ihrer Längsausdehnung umwickelt und berührt und
e) die Isolierung (3) die offene Stützstruktur (011,012) und den mindestens einen Kanal-Leiter (2) umhüllt und
f) mindestens ein Kanal (4) für ein Kühlfluid (5) vorhanden ist und dieser Kanal (4) durch die Stützstruktur (011,012) und die Kanal-Leiter (2) gebildet wird, und
g) wobei die Isolierung (3) für das Kühlfluid (5) undurchdringbar ist und elektrisch isolierend ist.

2. Ladekabel (12) nach Anspruch 1, **dadurch gekennzeichnet, dass** die beiden Einzelleitungen (61, 62) miteinander verdrillt sind.

3. Ladekabel (12) nach Anspruch 2, **dadurch gekennzeichnet, dass** ein gesamtes innerhalb des Schutzmantels (7) angeordnetes Innenleben des Ladekabels (12) zusammen mit den beiden Einzelleitungen (61, 62) verdrillt ist.

4. Ladekabel (12) nach einem der vorhergehenden Ansprüche, umfassend ein oder mehrere Signalkabel (101) oder Signalleiter aus Glasfasern, welche bevorzugt zumindest mit den beiden Einzelleitungen (61, 62) verdrillt sind.

5. Ladekabel (12) nach einem der vorhergehenden Ansprüche, umfassend mindestens einen Schlauch (81), bevorzugt zwei, drei oder vier Schläuche (81), aus einem fluiddichten Material, welche sich innerhalb des gemeinsamen Schutzmantels (7), aber außerhalb der Einzelleitungen (61, 62) befinden.

6. Ladekabel (12) nach einem der vorhergehenden Ansprüche, umfassend ein Erdleitergeflecht (93), das die erste und die zweite Einzelleitung (61, 62) umgibt und vom gemeinsamen Schutzmantel (7) umhüllt ist oder in diesen integriert ist, und/oder einen Erdleiter (9), der in den gemeinsamen Schutzmantel (7) integriert ist und die beiden Einzelleitungen (61, 62) gemeinsam umwickelt und/oder gemeinsam mit den beiden Einzelleitungen (61, 62) verdrillt ist.

7. Ladekabel (12) nach einem der vorhergehenden Ansprüche, aufweisend einen Außendurchmesser von weniger als 5 cm.

8. Ladekabel (12) nach einem der vorhergehenden Ansprüche, **dadurch gekennzeichnet, dass** die offene Stützstruktur (011,012) zumindest einer der Einzelleitungen (61, 62) eine Helix ist.

9. Ladekabel (12) nach einem der vorhergehenden Ansprüche, **dadurch gekennzeichnet, dass** jeder der Kanal-Leiter der Einzelleitungen (61, 62) einer Schraubenlinie mit einer Gängigkeit, einer Ganghöhe und einem Radius folgt und Gängigkeit und Ganghöhe der Schraubenlinien aller Kanal-Leiter im Wesentlichen gleich sind und wobei bevorzugt die Radien aller Schraubenlinien aller Kanal-Leiter gleich sind.

10. Ladekabel (12) nach einem der vorhergehenden Ansprüche, **dadurch gekennzeichnet, dass** die Isolierung jeder der Einzelleitungen (61, 62) eine faserverstärkte Isolierung ist.

11. Ladekabel (12) nach Anspruch 10, **dadurch gekennzeichnet, dass** die Fasern zu einem Geflecht verwoben sind.

12. Ladekabel (12) nach einem der Ansprüche 10 bis 11, wobei die Fasern im Wesentlichen in einer Lage angeordnet sind und in dieser Lage zwischen 30 und 90%, bevorzugt zwischen 50 und 70%, besonders bevorzugt etwa 60% der Fläche der Lage bedecken.

13. Verfahren zum Laden eines Energiespeichers (151), insbesondere einer Batterie eines Fahrzeugs (15), an einer stationären Ladestation, die Kühlfluid (5) und elektrische Energie zur Verfügung stellen kann und an welche ein erstes Ende eines Ladekabels (12) gemäß einem der Ansprüche 1 bis 12 angeschlossen ist, umfassend die Schritte:
a) Anschließen eines zweiten Endes des Ladekabels (12) an den Energiespeicher, insbesondere an die Batterie des Fahrzeuges,
b) Einbringen eines Kühlfluids (5) unter Druck, insbesondere Pumpen eines Kühlfluids (5), in die Kanäle (4) der Einzelleitungen (61, 62) des Ladekabels (12),
c) Übertragen von elektrischer Energie über die Kanal-Leiter (21) und gegebenenfalls die weiteren Leiter (22) der Einzelleitungen (61, 62) des Ladekabels (12),
wobei insbesondere Signalkabel (101) des Ladekabels (12) zur Übertragung von Signalen zur Steuerung und/oder Überwachung des Ladevorgangs und/oder des Ladezustands des Energiespeichers, insbesondere der Batterie, genutzt werden.

14. Verfahren zur Herstellung eines Ladekabels (12) gemäss einem der Ansprüche 1 bis 12 umfassend die folgenden Schritte, die bevorzugt nacheinander in einer Fertigungslinie ausgeführt werden:
a) Zur Verfügung stellen von zwei erfindungsgemäßen Einzelleitungen (61, 62) und gegebenenfalls weiteren Bestandteilen eines Innenlebens des Ladekabels als Endlosprodukte.
b) Verdrillen der Bestandteile des Innenlebens miteinander in eine erste Richtung.
c) Bevorzugt Umwickeln der verdrillten Bestandteile des Innenlebens mit Drähten, Bündeln oder Litzen in eine zweite Richtung, die sich von der ersten Richtung unterscheidet.
d) Koextrudieren eines Schutzmantels.

15. Ladesäule umfassend ein Ladekabel (12) nach einem der Ansprüche 1 bis 12, die einen Stecker eines Ladesystems mit einer stationären Stromquelle verbinden.
